# EUROPEAN PATENT APPLICATION

(11) **EP 4 245 525 A1**
(43) Date of publication of application: **20.09.2023**
(21) Application number: 21891946.2
(22) Date of filing: 11.11.2021
(51) Int. Cl.: B32B 17/10, C03C 27/12, B60J 1/00

(54) **INTERLAYER FILM FOR LAMINATED GLASS AND LAMINATED GLASS**

(30) Priority: 13.11.2020 JP 2020189694
(71) Applicant: SEKISUI CHEMICAL CO., LTD., Osaka-shi Osaka 530-8565 (JP)
(72) Inventor: INUI, Hiroaki, Kouka-shi, Shiga 528-8585 (JP); KUMAKURA, Koji, Kouka-shi, Shiga 528-8585 (JP); SHIRAISHI, Kazuma, Kouka-shi, Shiga 528-8585 (JP)
(74) Representative: Ter Meer Steinmeister & Partner
(86) International application number: PCT/JP2021/041516
(87) International publication number: WO 2022/102701

(57) **Abstract**

Provided is an interlayer film for a laminated glass capable of obtaining laminated glass having excellent unity of appearance. An interlayer film for a laminated glass according to the present invention has one end, and the other end, and when the interlayer film is arranged between two sheets of clear glass conforming to JIS R3202:1996 to obtain a laminated glass X, the interlayer film has a colored region where visible light transmittance of the laminated glass X is 1% to 50%, the colored region has a plane area of 95% or more in 100% of a total plane area of the interlayer film, the laminated glass X has a first visible light transmittance at a position of 5 cm from the one end toward the other end of the interlayer film, and a second visible light transmittance at a position of 5 cm from the other end toward the one end of the interlayer film, the first visible light transmittance being smaller than the second visible light transmittance, the first visible light transmittance is 1% to 20%, the second visible light transmittance is 5% to 50%, and an absolute value of difference between the first visible light transmittance and the second visible light transmittance is 2% to 45%.

## Description

### TECHNICAL FIELD

The present invention relates to an interlayer film for a laminated glass that is used for obtaining laminated glass. Moreover, the present invention relates to a laminated glass prepared with the interlayer film for a laminated glass.

### BACKGROUND ART

Laminated glass in which an interlayer film for a laminated glass is sandwiched between a pair of glass plates is known. The laminated glass is widely used for automobiles, railway vehicles, aircraft, ships, buildings and the like. In recent years, a laminated glass having privacy protectability is demanded as a laminated glass for buildings or automobiles. In a laminated glass having privacy protectability, for example, there is a region where a person or an object located behind the laminated glass is invisible although the region can transmit light.

As one example of a laminated glass having privacy protectability, the following Patent Document 1 discloses a laminated glass prepared with a multilayer interlayer film having an opaque layer. In the laminated glass, privacy protectability is achieved by the opaque layer that makes a person or an object located behind the laminated glass invisible.

The following Patent Document 2 discloses a laminated glass prepared with an interlayer film having a dark color part, a gradation pattern, and a transparent part.

### Related Art Document

### Patent Document

Patent Document 1: WO 2006/082800 A1
Patent Document 2: WO 2014/077328 A1

### SUMMARY OF THE INVENTION

### PROBLEMS TO BE SOLVED BY THE INVENTION

The design technology of a laminated glass has advanced, and uses of a laminated glass have been diversified. As the laminated glass, rear glass and roof glass are known. Further, as a new example of the laminated glass, rear-roof integrated glass in which rear glass and roof glass are integrated, or which looks as if rear glass and roof glass were integrated is conceivable.

In recent years, the designability of roof glass, rear glass, and rear-roof integrated glass have become more sophisticated.

However, the laminated glass described in Patent Document 1 faces the problem that the appearance designability is poor because the whole surface of the glass has the same color.

The interlayer film described in Patent Document 2 can enhance the appearance designability because it has a gradation pattern. However, since the colored region and the uncolored region are visible clearly differentially in the interlayer film, the laminated glass is not visible in a unified appearance.

It is an object of the present invention to provide an interlayer film for a laminated glass capable of obtaining laminated glass having excellent unity of appearance. Also, it is an object of the present invention to provide a laminated glass that is excellent in unity of appearance.

### MEANS FOR SOLVING THE PROBLEMS

According to a broad aspect of the present invention, there is provided an interlayer film for a laminated glass (hereinafter, also referred to as an interlayer film) having one end, and the other end being at an opposite side of the one end, the interlayer film having a colored region where visible light transmittance of a laminated glass X is 1% or more and 50% or less, when the interlayer film is arranged between two sheets of clear glass conforming to JIS R3202:1996 to obtain the laminated glass X; the colored region having a plane area of 95% or more in 100% of a total plane area of the interlayer film; the laminated glass X having a first visible light transmittance at a position of 5 cm from the one end toward the other end of the interlayer film, and a second visible light transmittance at a position of 5 cm from the other end toward the one end of the interlayer film, the first visible light transmittance being smaller than the second visible light transmittance; the first visible light transmittance being 1% or more and 20% or less; the second visible light transmittance being 5% or more and 50% or less; an absolute value of difference between the first visible light transmittance and the second visible light transmittance being 2% or more and 45% or less.

In a specific aspect of the interlayer film according to the present invention, the colored region has a plane area of 100% in 100% of a total plane area of the interlayer film.

In a specific aspect of the interlayer film according to the present invention, the interlayer film has a maximum value of absolute values of rate of change in visible light transmittance of the laminated glass X in the colored region of 4.5%/mm or less from the one end side toward the other end side of the interlayer film.

In a specific aspect of the interlayer film according to the present invention, the colored region has a first non-gradation region where visible light transmittance of the laminated glass X is uniform from the one end side toward the other end side of the interlayer film, and a second non-gradation region where visible light transmittance of the laminated glass X is uniform from the one end side toward the other end side of the interlayer film, and the first non-gradation region is located closer to the one end than the second non-gradation region.

In a specific aspect of the interlayer film according to the present invention, the interlayer film has a weight ratio of a total of contents of coloring agents contained in layers constituting the second non-gradation region of the interlayer film, to a total of contents of coloring agents contained in layers constituting the first non-gradation region of the interlayer film of 0.15 or more and 0.95 or less.

In a specific aspect of the interlayer film according to the present invention, the colored region has a gradation region where visible light transmittance of the laminated glass X increases from the one end side toward the other end side of the interlayer film, the first non-gradation region is located closer to the one end than the gradation region, and the second non-gradation region is located closer to the other end than the gradation region.

In a specific aspect of the interlayer film according to the present invention, the colored region has only a gradation region where visible light transmittance of the laminated glass X increases from the one end side toward the other end side of the interlayer film.

In a specific aspect of the interlayer film according to the present invention, at least one of layers constituting the colored region of the interlayer film contains heat shielding particles.

In a specific aspect of the interlayer film according to the present invention, the interlayer film is used in rear glass, roof glass or rear-roof integrated glass.

According to a broad aspect of the present invention, there is provided a laminated glass including a first lamination glass member, a second lamination glass member, and the above-described interlayer film for a laminated glass, the interlayer film for a laminated glass being arranged between the first lamination glass member and the second lamination glass member.

According to a broad aspect of the present invention, there is provided a laminated glass having one end, and the other end being at an opposite side of the one end, the laminated glass including: a first lamination glass member; a second lamination glass member; and an interlayer film, the interlayer film being arranged between the first lamination glass member and the second lamination glass member, the laminated glass having a colored region having a visible light transmittance of 1% or more and 50% or less, the colored region having a plane area of 95% or more in 100% of a total plane area of the laminated glass, the laminated glass having a first visible light transmittance at a position of 5 cm from the one end toward the other end, and a second visible light transmittance at a position of 5 cm from the other end toward the one end, the first visible light transmittance being smaller than the second visible light transmittance, the first visible light transmittance being 1% or more and 20% or less, the second visible light transmittance being 5% or more and 50% or less, an absolute value of difference between the first visible light transmittance and the second visible light transmittance being 2% or more and 45% or less.

In a specific aspect of the laminated glass according to the present invention, the colored region has a plane area of 100% in 100% of a total plane area of the laminated glass.

In a specific aspect of the laminated glass according to the present invention, the laminated glass has a maximum value of absolute values of rate of change in visible light transmittance in the colored region of 4.5%/mm or less from the one end side toward the other end side.

In a specific aspect of the laminated glass according to the present invention, the colored region has a first non-gradation region where visible light transmittance is uniform from the one end side toward the other end side, and a second non-gradation region where visible light transmittance is uniform from the one end side toward the other end side, and the first non-gradation region is located closer to the one end than the second non-gradation region.

In a specific aspect of the laminated glass according to the present invention, the colored region has a gradation region where visible light transmittance increases from the one end side toward the other end side, the first non-gradation region is located closer to the one end than the gradation region, and the second non-gradation region is located closer to the other end than the gradation region.

In a specific aspect of the laminated glass according to the present invention, the colored region has only a gradation region where visible light transmittance increases from the one end side toward the other end side.

### EFFECT OF THE INVENTION

In the interlayer film for a laminated glass according to the present invention, it is possible to obtain a laminated glass having excellent unity of appearance. The laminated glass according to the present invention is excellent in unity of appearance.

### BRIEF DESCRIPTION OF DRAWINGS

[Fig. 1] Fig. 1 is a sectional view schematically showing an interlayer film for a laminated glass in accordance with a first embodiment of the present invention.
[Fig. 2] Fig. 2 is a sectional view schematically showing a laminated glass prepared with the interlayer film for a laminated glass shown in Fig. 1.
[Fig. 3] Fig. 3 is a sectional view schematically showing an interlayer film for a laminated glass in accordance with a second embodiment of the present invention.
[Fig. 4] Fig. 4 is a sectional view schematically showing a laminated glass prepared with the interlayer film for a laminated glass shown in Fig. 3.
[Fig. 5] Fig. 5 is a sectional view schematically showing an interlayer film for a laminated glass in accordance with a third embodiment of the present invention.
[Fig. 6] Fig. 6 is a sectional view schematically showing a laminated glass prepared with the interlayer film for a laminated glass shown in Fig. 5.
[Fig. 7] Fig. 7 is a sectional view schematically showing an interlayer film for a laminated glass in accordance with a fourth embodiment of the present invention.
[Fig. 8] Fig. 8 is a sectional view schematically showing a laminated glass prepared with the interlayer film for a laminated glass shown in Fig. 7.
[Fig. 9] Fig. 9 is a sectional view schematically showing an interlayer film for a laminated glass in accordance with a fifth embodiment of the present invention.
[Fig. 10] Fig. 10 is a sectional view schematically showing a laminated glass prepared with the interlayer film for a laminated glass shown in Fig. 9.
[Fig. 11] Fig. 11 is a sectional view schematically showing an interlayer film for a laminated glass in accordance with a sixth embodiment of the present invention.
[Fig. 12] Fig. 12 is a sectional view schematically showing a laminated glass prepared with the interlayer film for a laminated glass shown in Fig. 11.
[Fig. 13] Fig. 13 is a sectional view schematically showing an interlayer film for a laminated glass in accordance with a seventh embodiment of the present invention.
[Fig. 14] Fig. 14 is a sectional view schematically showing a laminated glass prepared with the interlayer film for a laminated glass shown in Fig. 13.
[Fig. 15] Fig. 15 is a sectional view schematically showing an interlayer film for a laminated glass in accordance with an eighth embodiment of the present invention.
[Fig. 16] Fig. 16 is a sectional view schematically showing a laminated glass prepared with the interlayer film for a laminated glass shown in Fig. 15.
[Fig. 17] Fig. 17 is a sectional view schematically showing an interlayer film for a laminated glass in accordance with a ninth embodiment of the present invention.
[Fig. 18] Fig. 18 is a sectional view schematically showing a laminated glass prepared with the interlayer film for a laminated glass shown in Fig. 17.
[Fig. 19] Fig. 19 is a sectional view schematically showing an interlayer film for a laminated glass in accordance with a tenth embodiment of the present invention.
[Fig. 20] Fig. 20 is a sectional view schematically showing a laminated glass prepared with the interlayer film for a laminated glass shown in Fig. 19.

### MODES FOR CARRYING OUT THE INVENTION

Hereinafter, the details of the present invention will be described.

The interlayer film for a laminated glass according to the present invention (hereinafter, sometimes described as interlayer film) has one end, and the other end being at the opposite side of the one end. When the interlayer film according to the present invention is arranged between two sheets of clear glass conforming to JIS R3202:1996 to obtain a laminated glass X, the interlayer film has a color region with a visible light transmittance of the laminated glass X of 1% or more and 50% or less, and a plane area of the colored region is 95% or more in 100% of a total plane area of the interlayer film. In the interlayer film according to the present invention, a first visible light transmittance of the laminated glass X at a position of 5 cm from the one end toward the other end of the interlayer film is smaller than a second visible light transmittance of the laminated glass X at a position of 5 cm from the other end toward the one end of the interlayer film. In the interlayer film according to the present invention, the first visible light transmittance is 1% or more and 20% or less, the second visible light transmittance is 5% or more and 50% or less, and an absolute value of difference between the first visible light transmittance and the second visible light transmittance is 2% or more and 45% or less.

Since the interlayer film according to the present invention is provided with the aforementioned configuration, it is possible to obtain a laminated glass having excellent unity of appearance. Also, since the interlayer film according to the present invention is provided with the aforementioned configuration, it is possible to obtain a laminated glass having excellent appearance designability.

The laminated glass according to the present invention has one end and the other end being at the opposite side of the one end. The laminated glass according to the present invention includes a first lamination glass member, a second lamination glass member, and an interlayer film (interlayer film for a laminated glass), and the interlayer film is arranged between the first lamination glass member and the second lamination glass member. The laminated glass according to the present invention has a colored region with a visible light transmittance of 1% or more and 50% or less, and a plane area of the colored region in 100% of a total plane area of the laminated glass is 95% or more. In the laminated glass according to the present invention, a first visible light transmittance at a position of 5 cm from the one end toward the other end is smaller than a second visible light transmittance at a position of 5 cm from the other end toward the one end. In the laminated glass according to the present invention, the first visible light transmittance is 1% or more and 20% or less, the second visible light transmittance is 5% or more and 50% or less, and an absolute value of difference between the first visible light transmittance and the second visible light transmittance is 2% or more and 45% or less.

The laminated glass according to the present invention is excellent in unity of appearance because the aforementioned configuration is provided. Also, the laminated glass according to the present invention is excellent in appearance designability because the aforementioned configuration is provided.

In the present invention, visible light transmittance of a laminated glass X prepared with the interlayer film according to the present invention, and a laminated glass according to the present invention (hereinafter, sometimes described as laminated glass Y (or sometimes described as laminated glass)). The laminated glass X is prepared for measuring visible light transmittance. In the interlayer film according to the present invention, the laminated glass may be prepared with a lamination glass member other than two sheets of clear glass conforming to JIS R3202:1996, and the laminated glass may be prepared with a lamination glass member other than clear glass.

Visible light transmittance of the laminated glass X and the laminated glass Y according to the present invention is determined by measuring transmittance at a wavelength of 380 nm to 780 nm of the laminated glass X, Y in conformity with JIS R3106:1998 or JIS R3212:1998 using a spectrophotometer (for example, "U-4100" available from Hitachi High-tech Corporation).

The laminated glass X is prepared by arranging the interlayer film between two sheets of clear glass conforming to JIS R3202:1996. The laminated glass X is prepared for measuring visible light transmittance. It is preferred that the laminated glass X be prepared in the following manner.

The interlayer film is sandwiched between two sheets of clear glass conforming to JIS R3202:1996 having a thickness of 2 mm to obtain a laminate. The obtained laminate is put into a rubber bag and the inside thereof is degassed for 20 minutes with a degree of vacuum of 2.6 kPa, after which the laminate in the degassed condition is transferred into an oven, and vacuum-pressed by retention at 90°C for 30 minutes, and thus the laminate is preliminarily press-bonded. The preliminarily press-bonded laminate is subjected to press-bonding for 20 minutes under conditions of 135°C and a pressure of 1.2 MPa in an autoclave to obtain the laminated glass X.

The interlayer film according to the present invention has a colored region with a visible light transmittance of the laminated glass X of 1% or more and 50% or less. A plane area of the colored region in 100% of a total plane area of the interlayer film is 95% or more.

The laminated glass Y according to the present invention has a colored region with a visible light transmittance of laminated glass of 1% or more and 50% or less. A plane area of the colored region in 100% of a total plane area of the laminated glass Y is 95% or more.

In 100% of a total plane area of the interlayer film, or in 100% of a total plane area of the laminated glass Y, the plane area of the colored region is preferably 96% or more, more preferably 97% or more, further preferably 98% or more, especially preferably 99% or more. In 100% of a total plane area of the interlayer film, or in 100% of a total plane area of the laminated glass Y, the plane area of the colored region may be 100% or less, and is most preferably 100%. When the plane area of the colored region is the above lower limit or more, it is possible to further enhance the appearance designability and privacy protectability.

In the interlayer film according to the present invention, a first visible light transmittance of the laminated glass X at a position of 5 cm from the one end toward the other end of the interlayer film is smaller than a second visible light transmittance of the laminated glass X at a position of 5 cm from the other end toward the one end of the interlayer film.

In the laminated glass Y according to the present invention, a first visible light transmittance at a position of 5 cm from the one end toward the other end of the laminated glass is smaller than a second visible light transmittance at a position of 5 cm from the other end toward the one end of the laminated glass Y.

In the above laminated glass Y, it is sometimes the case that a lamination glass member has black ceramic in the entire perimeter or in part of the peripheral part. In this case, visible light transmittance at a position of 5 cm toward the non-black ceramic from the boundary between the black ceramic and the non-black ceramic (position of 5 cm from the one end toward the other end, or from the other end toward the one end of the laminated glass Y) can be defined as a first or second visible light transmittance.

In the interlayer film according to the present invention and in the laminated glass Y, the first visible light transmittance is 1% or more and 20% or less, the second visible light transmittance is 5% or more and 50% or less, and an absolute value of difference between the first visible light transmittance and the second visible light transmittance is 2% or more and 45% or less.

The first visible light transmittance is preferably 2% or more, more preferably 3% or more, and is preferably 15% or less, more preferably 10% or less, further preferably 8% or less, especially preferably 6% or less. When the first visible light transmittance is the above lower limit or more and the above upper limit or less, it is possible to further enhance the privacy protectability.

The second visible light transmittance is preferably 10% or more, more preferably 15% or more, further preferably 18% or more, and is preferably 45% or less, more preferably 35% or less, further preferably 30% or less, especially preferably 25% or less. When the second visible light transmittance is the above lower limit or more and the above upper limit or less, it is possible to further enhance the privacy protectability.

An absolute value of difference between the first visible light transmittance and the second visible light transmittance is preferably 3% or more, more preferably 4% or more, and is preferably 44% or less, more preferably 30% or less, further preferably 25% or less, especially preferably 17% or less. When the absolute value of difference is the above lower limit or more and the above upper limit or less, it is possible to further enhance the unity of appearance of the laminated glass.

A maximum value of absolute values of rate of change in visible light transmittance of the laminated glass X in the colored region from the one end side toward the other end side of the interlayer film is referred to as a maximum value (1). A maximum value of absolute values of rate of change in visible light transmittance in the colored region from the one end side toward the other end side of the laminated glass Y is referred to as a maximum value (2). Each of the maximum value (1) and the maximum value (2) is preferably 4.5%/mm or less, more preferably 3%/mm or less, further preferably 2%/mm or less. When the maximum value (1) and the maximum value (2) are the above upper limit or less, it is possible to further enhance the unity of appearance of the laminated glass. Each of the maximum value (1) and the maximum value (2) may be 0.02%/mm or more, may be 0.2%/mm or more, and may be 1.0%/mm or more.

In the interlayer film, it is preferred that the colored region have a non-gradation region where visible light transmittance of the laminated glass X is uniform from the one end side toward the other end side of the interlayer film.

In the interlayer film, it is preferred that the colored region have a first non-gradation region where visible light transmittance of the laminated glass X is uniform from the one end side toward the other end side of the interlayer film, and a second non-gradation region where visible light transmittance of the laminated glass X is uniform from the one end side toward the other end side of the interlayer film. In this case, the first non-gradation region is located closer to the one end of the interlayer film than the second non-gradation region. In this case, it is possible to further enhance unity of appearance and appearance designability.

From the viewpoint of further enhancing the appearance designability, in the interlayer film, it is preferred that the colored region have a gradation region where visible light transmittance of the laminated glass X increases from the one end side toward the other end side of the interlayer film.

In the laminated glass Y, it is preferred that the colored region have a non-gradation region where visible light transmittance is uniform from the one end side toward the other end side of the laminated glass Y.

In the laminated glass Y, it is preferred that the colored region have a first non-gradation region where visible light transmittance is uniform from the one end side toward the other end side of the laminated glass Y, and a second non-gradation region where visible light transmittance is uniform from the one end side toward the other end side of the laminated glass Y. In this case, the first non-gradation region is located closer to the one end of the laminated glass than the second non-gradation region. In this case, it is possible to further enhance unity of appearance and appearance designability.

From the viewpoint of further enhancing the appearance designability, in the laminated glass Y, it is preferred that the colored region have a gradation region where visible light transmittance increases from the one end side toward the other end side of the laminated glass Y.

The wording "visible light transmittance is uniform" in the non-gradation region (first, second non-gradation regions) means that the visible light transmittance does not change at all from the one end side toward the other end side, or the visible light transmittance changes with an absolute value of rate of change in visible light transmittance of less than 0.02%/mm. Also, the gradation region means that visible light transmittance increases with an absolute value of rate of change in visible light transmittance of 0.02%/mm or more from the one end side toward the other end side.

In the interlayer film and the laminated glass Y, the colored region may have a non-gradation region on one end side and a gradation region on the other end side. In the interlayer film and the laminated glass Y, the colored region may have a gradation region on one end side and a non-gradation region on the other end side.

In the interlayer film and the laminated glass Y, the colored region need not have a gradation region, and may have only a gradation region. In the interlayer film and the laminated glass Y, the colored need not have a non-gradation region. When the colored region has only a gradation region, it is possible to further enhance the unity of appearance and the appearance designability. In the interlayer film and the laminated glass Y, the colored region may have only a non-gradation region.

In 100% of a total plane area of the interlayer film, or in 100% of a total plane area of the laminated glass Y, the plane area of the non-gradation region is preferably 20% or more, more preferably 30% or more, further preferably 40% or more, and is preferably 99% or less, more preferably 95% or less, further preferably 90% or less. When the plane area of the non-gradation region is the above lower limit or more and the above upper limit or less, it is possible to further enhance the unity of appearance, the appearance designability and the privacy protectability. The plane area of the non-gradation region means the total of the plane area of the first non-gradation region and the plane area of the second non-gradation region when the non-gradation region has the first non-gradation region and the second non-gradation region. In 100% of a total plane area of the interlayer film, or in 100% of a total plane area of the laminated glass Y, the plane area of the non-gradation region may be 0% or more, may be 100% or less, and may be 100%.

In 100% of a total plane area of the interlayer film, or in 100% of a total plane area of the laminated glass Y, the plane area of the first non-gradation region is preferably 5% or more, more preferably 25% or more, further preferably 45% or more, and is preferably 80% or less, more preferably 70% or less, further preferably 60% or less. When the plane area of the first non-gradation region is the above lower limit or more and the above upper limit or less, it is possible to further enhance the unity of appearance, the appearance designability and the privacy protectability.

In 100% of a total plane area of the interlayer film, or in 100% of a total plane area of the laminated glass Y, the plane area of the second non-gradation region is preferably 10% or more, more preferably 20% or more, further preferably 30% or more, and is preferably 70% or less, more preferably 60% or less, further preferably 50% or less. When the plane area of the second non-gradation region is the above lower limit or more and the above upper limit or less, it is possible to further enhance the unity of appearance, the appearance designability and the privacy protectability.

In 100% of a total plane area of the interlayer film, or in 100% of a total plane area of the laminated glass Y, the plane area of the gradation region is preferably 0.5% or more, more preferably 1% or more, further preferably 5% or more, and is preferably 75% or less, more preferably 50% or less, further preferably 25% or less. When the plane area of the gradation region is the above lower limit or more and the above upper limit or less, it is possible to further enhance the unity of appearance, the appearance designability and the privacy protectability. In 100% of a total plane area of the interlayer film, or in 100% of a total plane area of the laminated glass Y, the plane area of the gradation region may be 100% or less, and may be 100%.

In 100% of a total plane area of the interlayer film, or in 100% of a total plane area of the laminated glass Y, a total of plane areas of the first non-gradation region and the gradation region is preferably 30% or more, more preferably 40% or more, further preferably 50% or more, and is preferably 85% or less, more preferably 75% or less, further preferably 65% or less. When the total is the above lower limit or more and the above upper limit or less, it is possible to further enhance the unity of appearance, the appearance designability and the privacy protectability.

Hereinafter, specific embodiments of the present invention will be described with reference to the drawings. The size and dimension of the interlayer film and the laminated glass in the drawings described below are appropriately changed from the actual size and shape for convenience of illustration. In the drawings described below, different points are replaceable. In the drawings described below, the part that may have the same configuration is sometimes denoted by the same reference symbol.

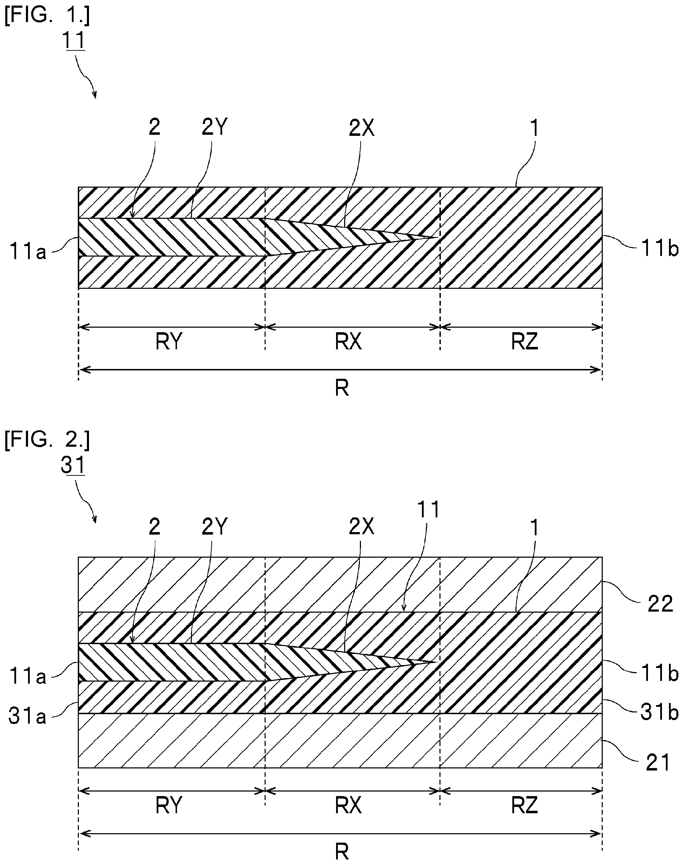

Fig. 1 is a sectional view schematically showing an interlayer film for a laminated glass in accordance with a first embodiment of the present invention. Fig. 2 is a sectional view schematically showing a laminated glass prepared with the interlayer film for a laminated glass shown in Fig. 1.

Fig. 1 is a sectional view along the thickness direction of an interlayer film 11. The interlayer film 11 has one end 11a, and the other end 11b. The one end 11a and the other end 11b are end parts of both sides facing each other.

The interlayer film 11 includes a first layer 1 containing a coloring agent, and a second layer 2 containing a coloring agent. The second layer 2 reaches the one end 11a of the interlayer film 11. The second layer 2 does not reach the other end 11b of the interlayer film 11. The one end 11a part of the interlayer film 11 is configured by the first layer 1 and the second layer 2. The other end 11b part of the interlayer film 11 is configured by the first layer 1.

On both surface sides of the second layer 2, the first layer 1 is arranged. The second layer 2 is embedded in the first layer 1. The first layer 1 is a surface layer of the interlayer film 11. The second layer 2 is an intermediate layer of the interlayer film 11.

The second layer 2 has a gradation part 2X where visible light transmittance increases from the one end 11a side toward the other end 11b side of the interlayer film 11. The second layer 2 has a non-gradation part 2Y on the one end 11a side of the interlayer film 11. The second layer 2 reaches the one end 11a of the interlayer film 11 in the non-gradation part 2Y. The gradation part 2X is a part where the thickness of the second layer 2 decreases from the one end 11a side toward the other end 11b side of the interlayer film 11. The non-gradation part 2Y is a part where the thickness of the second layer 2 is uniform.

In the interlayer film 11, the region from the one end 11a to the other end 11b is a colored region R. The colored region R has a first non-gradation region RY, a gradation region RX, and a second non-gradation region RZ. The first non-gradation region RY is located closer to the one end 11a than the gradation region RX, and the second non-gradation region RZ is located closer to the other end 11b than the gradation region RX. Each of the colored region R, the first non-gradation region RY, the gradation region RX, and the second non-gradation region RZ is set by preparing the above-described laminated glass X and measuring the visible light transmittance of the laminated glass X.

The first non-gradation region RY of the interlayer film 11 is a region where the first layer 1 and the non-gradation part 2Y of the second layer 2 exist in the thickness direction of the interlayer film 11. The gradation region RX of the interlayer film 11 is a region where the first layer 1 and a gradation part 2X of the second layer 2 exist in the thickness direction of the interlayer film 11. The second non-gradation region RZ of the interlayer film 11 is a region where only the first layer 1 exists in the thickness direction of the interlayer film 11. The second non-gradation region RZ of the interlayer film 11 is a region where the second layer 2 does not exist in the thickness direction of the interlayer film 11.

Fig. 2 is a sectional view along the thickness direction of a laminated glass 31. The laminated glass 31 includes a first lamination glass member 21, a second lamination glass member 22 and the interlayer film 11. The interlayer film 11 is arranged between the first lamination glass member 21 and the second lamination glass member 22. The first lamination glass member 21 is arranged on a first surface side of the interlayer film 11 to be layered thereon. The second lamination glass member 22 is arranged on a second surface side opposite to the first surface of the interlayer film 11 to be layered thereon.

The laminated glass 31 has one end 31a, and the other end 31b. The one end 31a and the other end 31b are end parts of both sides facing each other. In the laminated glass 31, the region from the one end 31a to the other end 31b is a colored region R. The colored region R has a first non-gradation region RY, a gradation region RX, and a second non-gradation region RZ. The first non-gradation region RY is located closer to the one end 31a than the gradation region RX, and the second non-gradation region RZ is located closer to the other end 31b than the gradation region RX.

The first non-gradation region RY of the laminated glass 31 is a region where the first lamination glass member 21, the second lamination glass member 22, the first layer 1, and the non-gradation part 2Y of the second layer 2 exist in the thickness direction of the laminated glass 31. The gradation region RX of the laminated glass 31 is a region where the first lamination glass member 21, the second lamination glass member 22, the first layer 1, and the gradation part 2X of the second layer 2 exist in the thickness direction of the laminated glass 31. The second non-gradation region RZ of the laminated glass 31 is a region where the first lamination glass member 21, the second lamination glass member 22, and the first layer 1 exist in the thickness direction of the laminated glass 31. The second non-gradation region RZ of the laminated glass 31 is a region where the second layer 2 does not exist in the thickness direction of the laminated glass 31.

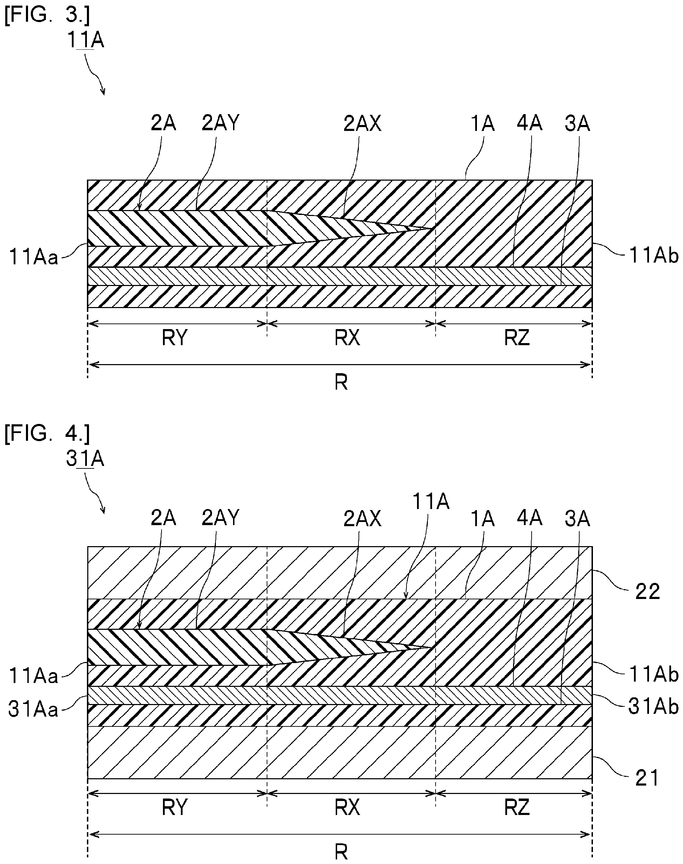

Fig. 3 is a sectional view schematically showing an interlayer film for a laminated glass in accordance with a second embodiment of the present invention. Fig. 4 is a sectional view schematically showing a laminated glass prepared with the interlayer film for a laminated glass shown in Fig. 3.

Fig. 3 is a sectional view along the thickness direction of an interlayer film 11A. The interlayer film 11A has one end 11Aa, and the other end 11Ab. The one end 11Aa and the other end 11Ab are end parts of both sides facing each other.

The interlayer film 11A includes a first layer 1A containing a coloring agent, a second layer 2A containing a coloring agent, a third layer 3A containing a coloring agent, and a fourth layer 4A not containing a coloring agent. The second layer 2A reaches the one end 11Aa of the interlayer film 11A. The second layer 2A does not reach the other end 11Ab of the interlayer film 11A. The one end 11Aa part of the interlayer film 11A is configured by the first layer 1A, the second layer 2A, the third layer 3A, and the fourth layer 4A. The other end 11Ab part of the interlayer film 11A is configured by the first layer 1A, the third layer 3A, and the fourth layer 4A.

On both surface sides of the second layer 2A, the first layer 1A is arranged. The second layer 2A is embedded in the first layer 1A. The first layer 1A is a surface layer of the interlayer film 11A. The second layer 2A is an intermediate layer of the interlayer film 11A.

The third layer 3A is arranged on a surface side opposite to the first layer 1A of the fourth layer 4A to be layered thereon. The fourth layer 4A is arranged on a surface side opposite to the second layer 2A of the first layer 1A to be layered thereon. The third layer 3A is a surface layer of the interlayer film 11A. The fourth layer 4A is an intermediate layer of the interlayer film 11A. The fourth layer 4A is a sound insulating layer.

The second layer 2A has a gradation part 2AX where visible light transmittance increases from the one end 11Aa side toward the other end 11Ab side of the interlayer film 11A. The second layer 2A has a non-gradation part 2AY on the one end 11Aa side of the interlayer film 11A. The second layer 2A reaches the one end 11Aa of the interlayer film 11A in the non-gradation part 2AY. The gradation part 2AX is a part where the thickness of the second layer 2A decreases from the one end 11Aa side toward the other end 11Ab side of the interlayer film 11A. The non-gradation part 2AY is a part where the thickness of the second layer 2A is uniform.

In the interlayer film 11A, the region from the one end 11Aa to the other end 11Ab is a colored region R. The colored region R has a first non-gradation region RY, a gradation region RX, and a second non-gradation region RZ. The first non-gradation region RY is located closer to the one end 11Aa than the gradation region RX, and the second non-gradation region RZ is located closer to the other end 11Ab than the gradation region RX. Each of the colored region R, the first non-gradation region RY, the gradation region RX, and the second non-gradation region RZ is set by preparing the above-described laminated glass X and measuring the visible light transmittance of the laminated glass X.

The first non-gradation region RY of the interlayer film 11A is a region where the first layer 1A, the non-gradation part 2AY of the second layer 2A, the third layer 3A, and the fourth layer 4A exist in the thickness direction of the interlayer film 11A. The gradation region RX of the interlayer film 11A is a region where the first layer 1A, the gradation part 2AX of the second layer 2A, the third layer 3A, and the fourth layer 4A exist in the thickness direction of the interlayer film 11A. The second non-gradation region RZ of the interlayer film 11A is a region where the first layer 1A, the third layer 3A, and the fourth layer 4A exist in the thickness direction of the interlayer film 11A. The second non-gradation region RZ of the interlayer film 11A is a region where the second layer 2A does not exist in the thickness direction of the interlayer film 11A.

Fig. 4 is a sectional view along the thickness direction of a laminated glass 31A. The laminated glass 31A includes the first lamination glass member 21, the second lamination glass member 22 and the interlayer film 11A. The interlayer film 11A is arranged between the first lamination glass member 21 and the second lamination glass member 22. The first lamination glass member 21 is arranged on a first surface side of the interlayer film 11A to be layered thereon. The second lamination glass member 22 is arranged on a second surface side opposite to the first surface of the interlayer film 11A to be layered thereon.

The laminated glass 31A has one end 31Aa, and the other end 31Ab. The one end 31Aa and the other end 31Ab are end parts of both sides facing each other. In the laminated glass 31A, the region from the one end 31Aa to the other end 31Ab is a colored region R. The colored region R has a first non-gradation region RY, a gradation region RX, and a second non-gradation region RZ. The first non-gradation region RY is located closer to the one end 31Aa than the gradation region RX, and the second non-gradation region RZ is located closer to the other end 31Ab than the gradation region RX.

The first non-gradation region RY of the laminated glass 31A is a region where the first lamination glass member 21, the second lamination glass member 22, the first layer 1A, the non-gradation part 2AY of the second layer 2A, the third layer 3A, and the fourth layer 4A exist in the thickness direction of the laminated glass 31A. The gradation region RX of the laminated glass 31A is a region where the first lamination glass member 21, the second lamination glass member 22, the first layer 1A, the gradation part 2AX of the second layer 2A, the third layer 3A, and the fourth layer 4A exist in the thickness direction of the laminated glass 31A. The second non-gradation region RZ of the laminated glass 31A is a region where the first lamination glass member 21, the second lamination glass member 22, the first layer 1A, the third layer 3A, and the fourth layer 4A exist in the thickness direction of the laminated glass 31A. The second non-gradation region RZ of the laminated glass 31A is a region where the second layer 2A does not exist in the thickness direction of the laminated glass 31A.

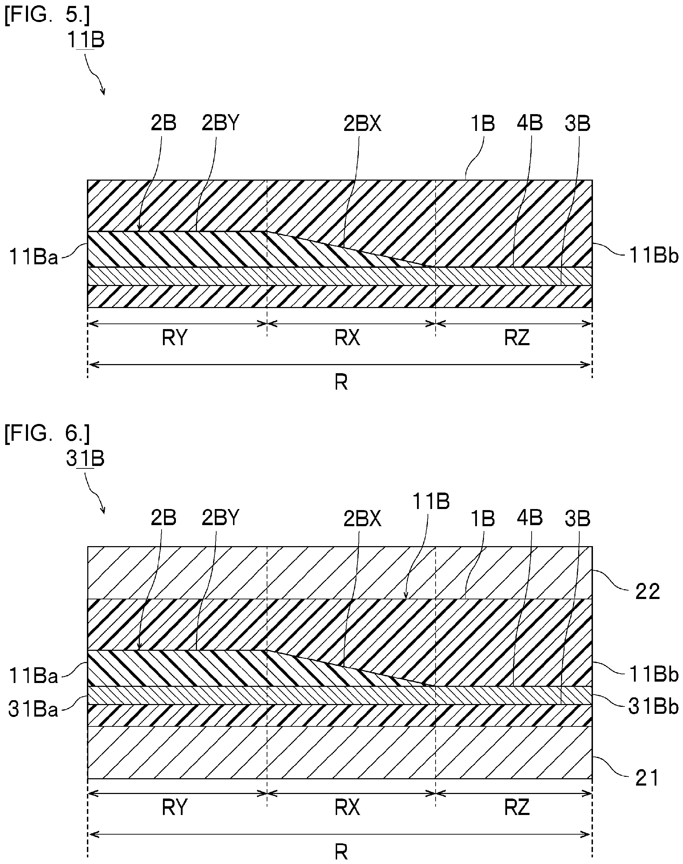

Fig. 5 is a sectional view schematically showing an interlayer film for a laminated glass in accordance with a third embodiment of the present invention. Fig. 6 is a sectional view schematically showing a laminated glass prepared with the interlayer film for a laminated glass shown in Fig. 5.

Fig. 5 is a sectional view along the thickness direction of an interlayer film 11B. The interlayer film 11B has one end 11Ba, and the other end 11Bb. The one end 11Ba and the other end 11Bb are end parts of both sides facing each other.

The interlayer film 11B includes a first layer 1B containing a coloring agent, a second layer 2B containing a coloring agent, a third layer 3B containing a coloring agent, and a fourth layer 4B not containing a coloring agent. The second layer 2B reaches the one end 11Ba of the interlayer film 11B. The second layer 2B does not reach the other end 11Bb of the interlayer film 11B. The one end 11Ba part of the interlayer film 11B is configured by the first layer 1B, the second layer 2B, the third layer 3B, and the fourth layer 4B. The other end 11Bb part of the interlayer film 11B is configured by the first layer 1B, the third layer 3B, and the fourth layer 4B.

On one surface side of the second layer 2B, the first layer 1B is arranged. On the other surface side of the second layer 2B, the fourth layer 4B is arranged. The second layer 2B is embedded between the first layer 1B and the fourth layer 4B. The first layer 1B is a surface layer of the interlayer film 11B. The second layer 2B is an intermediate layer of the interlayer film 11B.

The third layer 3B is arranged on a surface side opposite to the first layer 1B of the fourth layer 4B to be layered thereon. The fourth layer 4B is arranged on a surface side opposite to the second layer 2B of the first layer 1B to be layered thereon. The fourth layer 4B is arranged on the surface of the first layer 1B to be layered thereon. The third layer 3B is a surface layer of the interlayer film 11B. The fourth layer 4B is an intermediate layer of the interlayer film 11B. The fourth layer 4B is a sound insulating layer.

The second layer 2B has a gradation part 2BX where visible light transmittance increases from the one end 11Ba side toward the other end 11Bb side of the interlayer film 11B. The second layer 2B has a non-gradation part 2BY on the one end 11Ba side of the interlayer film 11B. The second layer 2B reaches the one end 11Ba of the interlayer film 11B in the non-gradation part 2BY. The gradation part 2BX is a part where the thickness of the second layer 2B decreases from the one end 11Ba side toward the other end 11Bb side of the interlayer film 11B. The non-gradation part 2BY is a part where the thickness of the second layer 2B is uniform.

In the interlayer film 11B, the region from the one end 11Ba to the other end 11Bb is a colored region R. The colored region R has a first non-gradation region RY, a gradation region RX, and a second non-gradation region RZ. The first non-gradation region RY is located closer to the one end 11Ba than the gradation region RX, and the second non-gradation region RZ is located closer to the other end 11Bb than the gradation region RX. Each of the colored region R, the first non-gradation region RY, the gradation region RX, and the second non-gradation region RZ is set by preparing the above-described laminated glass X and measuring the visible light transmittance of the laminated glass X.

The first non-gradation region RY of the interlayer film 11B is a region where the first layer 1B, the non-gradation part 2BY of the second layer 2B, the third layer 3B, and the fourth layer 4B exist in the thickness direction of the interlayer film 11B. The gradation region RX of the interlayer film 11B is a region where the first layer 1B, the gradation part 2BX of the second layer 2B, the third layer 3B, and the fourth layer 4B exist in the thickness direction of the interlayer film 11B. The second non-gradation region RZ of the interlayer film 11B is a region where the first layer 1B, the third layer 3B, and the fourth layer 4B exist in the thickness direction of the interlayer film 11B. The second non-gradation region RZ of the interlayer film 11B is a region where the second layer 2B does not exist in the thickness direction of the interlayer film 11B.

Fig. 6 is a sectional view along the thickness direction of a laminated glass 31B. The laminated glass 31B includes the first lamination glass member 21, the second lamination glass member 22 and the interlayer film 11B. The interlayer film 11B is arranged between the first lamination glass member 21 and the second lamination glass member 22. The first lamination glass member 21 is arranged on a first surface side of the interlayer film 11B to be layered thereon. The second lamination glass member 22 is arranged on a second surface side opposite to the first surface of the interlayer film 11B to be layered thereon.

The laminated glass 31B has one end 31Ba, and the other end 31Bb. The one end 31Ba and the other end 31Bb are end parts of both sides facing each other. In the laminated glass 31B, the region from the one end 31Ba to the other end 31Bb is a colored region R. The colored region R has a first non-gradation region RY, a gradation region RX, and a second non-gradation region RZ. The first non-gradation region RY is located closer to the one end 31Ba than the gradation region RX, and the second non-gradation region RZ is located closer to the other end 31Bb than the gradation region RX.

The first non-gradation region RY of the laminated glass 31B is a region where the first lamination glass member 21, the second lamination glass member 22, the first layer 1B, the non-gradation part 2BY of the second layer 2B, the third layer 3B, and the fourth layer 4B exist in the thickness direction of the laminated glass 31B. The gradation region RX of the laminated glass 31B is a region where the first lamination glass member 21, the second lamination glass member 22, the first layer 1B, the gradation part 2BX of the second layer 2B, the third layer 3B, and the fourth layer 4B exist in the thickness direction of the laminated glass 31B. The second non-gradation region RZ of the laminated glass 31B is a region where the first lamination glass member 21, the second lamination glass member 22, the first layer 1B, the third layer 3B, and the fourth layer 4B exist in the thickness direction of the laminated glass 31B. The second non-gradation region RZ of the laminated glass 31B is a region where the second layer 2B does not exist in the thickness direction of the laminated glass 31B.

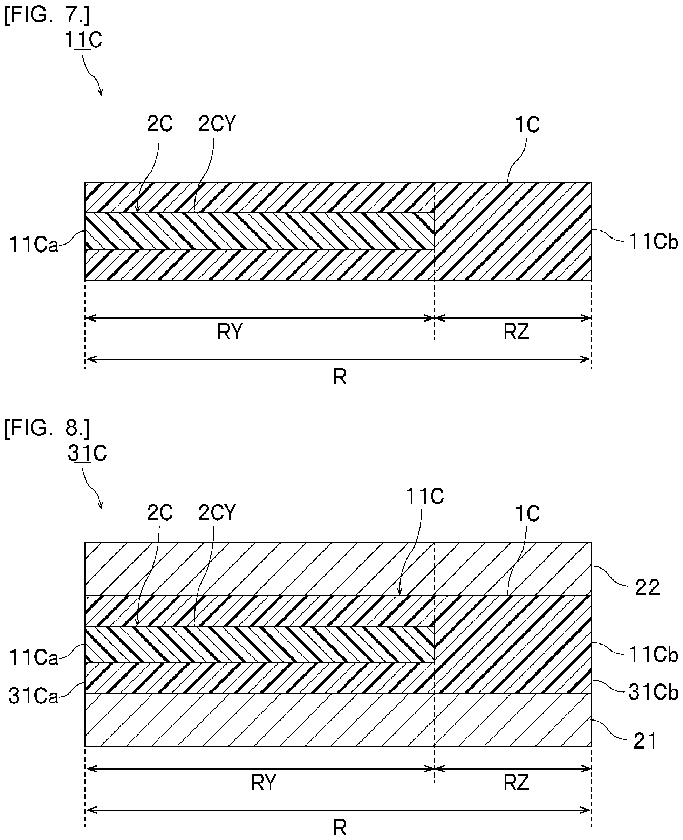

Fig. 7 is a sectional view schematically showing an interlayer film for a laminated glass in accordance with a fourth embodiment of the present invention. Fig. 8 is a sectional view schematically showing a laminated glass prepared with the interlayer film for a laminated glass shown in Fig. 7.

Fig. 7 is a sectional view along the thickness direction of an interlayer film 11C. The interlayer film 11C has one end 11Ca, and the other end 11Gb. The one end 11Ca and the other end 11Cb are end parts of both sides facing each other.

The interlayer film 11C includes a first layer 1C containing a coloring agent, and a second layer 2C containing a coloring agent. The second layer 2C reaches the one end 11Ca of the interlayer film 11C. The second layer 2C does not reach the other end 11Cb of the interlayer film 11C. The one end 11Ca part of the interlayer film 11C is configured by the first layer 1C and the second layer 2C. The other end 11Cb part of the interlayer film 11C is configured by the first layer 1C.

On both surface sides of the second layer 2C, the first layer 1C is arranged. The second layer 2C is embedded in the first layer 1C. The first layer 1C is a surface layer of the interlayer film 11C. The second layer 2C is an intermediate layer of the interlayer film 11C.

The second layer 2C has only a non-gradation part 2CY. The non-gradation part 2CY is a part where the thickness of the second layer 2C is uniform.

In the interlayer film 11C, the region from the one end 11Ca to the other end 11Cb is a colored region R. The colored region R has a first non-gradation region RY, and a second non-gradation region RZ. The first non-gradation region RY is located closer to the one end 11Ca than the second non-gradation region RZ. Each of the colored region R, the first non-gradation region RY, and the second non-gradation region RZ is set by preparing the above-described laminated glass X and measuring the visible light transmittance of the laminated glass X.

The first non-gradation region RY of the interlayer film 11C is a region where the first layer 1C and the non-gradation part 2CY of the second layer 2C exist in the thickness direction of the interlayer film 11C. The second non-gradation region RZ of the interlayer film 11C is a region where only the first layer 1C exists in the thickness direction of the interlayer film 11C. The second non-gradation region RZ of the interlayer film 11C is a region where the second layer 2C does not exist in the thickness direction of the interlayer film 11C.

Fig. 8 is a sectional view along the thickness direction of a laminated glass 31C. The laminated glass 31C includes the first lamination glass member 21, the second lamination glass member 22 and the interlayer film 11C. The interlayer film 11C is arranged between the first lamination glass member 21 and the second lamination glass member 22. The first lamination glass member 21 is arranged on a first surface side of the interlayer film 11C to be layered thereon. The second lamination glass member 22 is arranged on a second surface side opposite to the first surface of the interlayer film 11C to be layered thereon.

The laminated glass 31C has one end 31Ca, and the other end 31Cb. The one end 31Ca and the other end 31Cb are end parts of both sides facing each other. In the laminated glass 31C, the region from the one end 31Ca to the other end 31Cb is a colored region R. The colored region R has a first non-gradation region RY, and a second non-gradation region RZ. The first non-gradation region RY is located closer to the one end 31Ca than the second non-gradation region RZ.

The first non-gradation region RY of the laminated glass 31C is a region where the first lamination glass member 21, the second lamination glass member 22, the first layer 1C, and the non-gradation part 2CY of the second layer 2C exist in the thickness direction of the laminated glass 31C. The second non-gradation region RZ of the laminated glass 31C is a region where the first lamination glass member 21, the second lamination glass member 22, and the first layer 1C exist in the thickness direction of the laminated glass 31C. The second non-gradation region RZ of the laminated glass 31C is a region where the second layer 2C does not exist in the thickness direction of the laminated glass 31C.

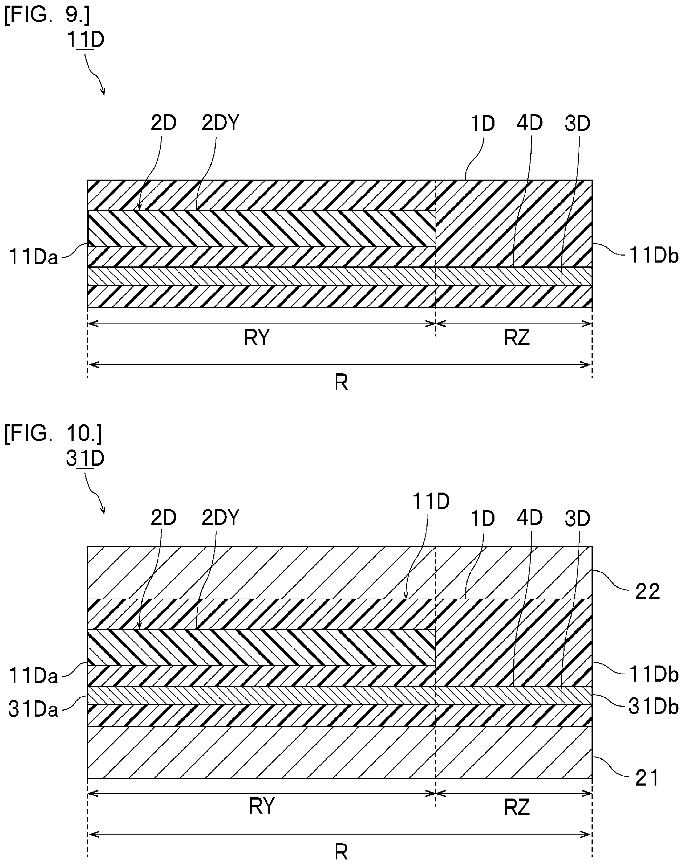

Fig. 9 is a sectional view schematically showing an interlayer film for a laminated glass in accordance with a fifth embodiment of the present invention. Fig. 10 is a sectional view schematically showing a laminated glass prepared with the interlayer film for a laminated glass shown in Fig. 9.

Fig. 9 is a sectional view along the thickness direction of an interlayer film 11D. The interlayer film 11D has one end 11Da, and the other end 11Db. The one end 11Da and the other end 11Db are end parts of both sides facing each other.

The interlayer film 11D includes a first layer 1D containing a coloring agent, a second layer 2D containing a coloring agent, a third layer 3D containing a coloring agent, and a fourth layer 4D not containing a coloring agent. The second layer 2D reaches the one end 11Da of the interlayer film 11D. The second layer 2D does not reach the other end 11Db of the interlayer film 11D. The one end 11Da part of the interlayer film 11D is configured by the first layer 1D, the second layer 2D, the third layer 3D, and the fourth layer 4D. The other end 11Db part of the interlayer film 11D is configured by the first layer 1D, the third layer 3D, and the fourth layer 4D.

On both surface sides of the second layer 2D, the first layer 1D is arranged. The second layer 2D is embedded in the first layer 1D. The first layer 1D is a surface layer of the interlayer film 11D. The second layer 2D is an intermediate layer of the interlayer film 11D.

The third layer 3D is arranged on a surface side opposite to the first layer 1D of the fourth layer 4D to be layered thereon. The fourth layer 4D is arranged on a surface side opposite to the second layer 2D of the first layer 1D to be layered thereon. The third layer 3D is a surface layer of the interlayer film 11D. The fourth layer 4D is an intermediate layer of the interlayer film 11D. The fourth layer 4D is a sound insulating layer.

The second layer 2D has only a non-gradation part 2DY. The non-gradation part 2DY is a part where the thickness of the second layer 2D is uniform.

In the interlayer film 11D, the region from the one end 11Da to the other end 11Db is a colored region R. The colored region R has a first non-gradation region RY, and a second non-gradation region RZ. The first non-gradation region RY is located closer to the one end 11Da than the second non-gradation region RZ. Each of the colored region R, the first non-gradation region RY, and the second non-gradation region RZ is set by preparing the above-described laminated glass X and measuring the visible light transmittance of the laminated glass X.

The first non-gradation region RY of the interlayer film 11D is a region where the first layer 1D, the non-gradation part 2DY of the second layer 2D, the third layer 3D, and the fourth layer 4D exist in the thickness direction of the interlayer film 11D. The second non-gradation region RZ of the interlayer film 11D is a region where the first layer 1D, the third layer 3D, and the fourth layer 4D exist in the thickness direction of the interlayer film 11D. The second non-gradation region RZ of the interlayer film 11D is a region where the second layer 2D does not exist in the thickness direction of the interlayer film 11D.

Fig. 10 is a sectional view along the thickness direction of a laminated glass 31D. The laminated glass 31D includes the first lamination glass member 21, the second lamination glass member 22 and the interlayer film 11D. The interlayer film 11D is arranged between the first lamination glass member 21 and the second lamination glass member 22. The first lamination glass member 21 is arranged on a first surface side of the interlayer film 11D to be layered thereon. The second lamination glass member 22 is arranged on a second surface side opposite to the first surface of the interlayer film 11D to be layered thereon.

The laminated glass 31D has one end 31Da, and the other end 31Db. The one end 31Da and the other end 31Db are end parts of both sides facing each other. In the laminated glass 31D, the region from the one end 31Da to the other end 31Db is a colored region R. The colored region R has a first non-gradation region RY, and a second non-gradation region RZ. The first non-gradation region RY is located closer to the one end 31Da than the second non-gradation region RZ.

The first non-gradation region RY of the laminated glass 31D is a region where the first lamination glass member 21, the second lamination glass member 22, the first layer 1D, the non-gradation part 2DY of the second layer 2D, the third layer 3D, and the fourth layer 4D exist in the thickness direction of the laminated glass 31D. The second non-gradation region RZ of the laminated glass 31D is a region where the first lamination glass member 21, the second lamination glass member 22, the first layer 1D, the third layer 3D, and the fourth layer 4D exist in the thickness direction of the laminated glass 31D. The second non-gradation region RZ of the laminated glass 31D is a region where the second layer 2D does not exist in the thickness direction of the laminated glass 31D.

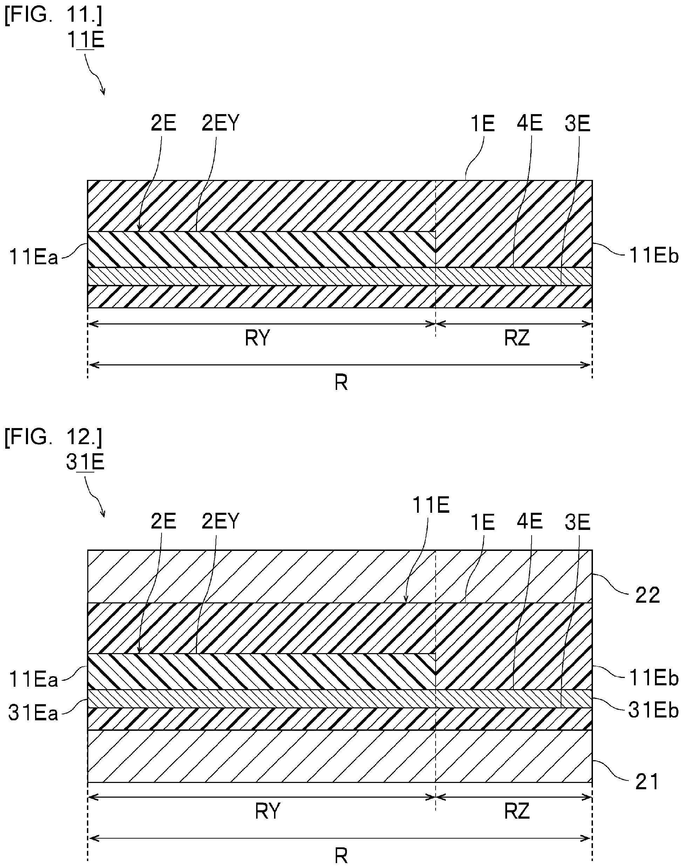

Fig. 11 is a sectional view schematically showing an interlayer film for a laminated glass in accordance with a sixth embodiment of the present invention. Fig. 12 is a sectional view schematically showing a laminated glass prepared with the interlayer film for a laminated glass shown in Fig. 11.

Fig. 11 is a sectional view along the thickness direction of an interlayer film 11E. The interlayer film 11E has one end 11Ea, and the other end 11Eb. The one end 11Ea and the other end 11Eb are end parts of both sides facing each other.

The interlayer film 11E includes a first layer 1E containing a coloring agent, a second layer 2E containing a coloring agent, a third layer 3E containing a coloring agent, and a fourth layer 4E not containing a coloring agent. The second layer 2E reaches the one end 11Ea of the interlayer film 11E. The second layer 2E does not reach the other end 11Eb of the interlayer film 11E. The one end 11Ea part of the interlayer film 11E is configured by the first layer 1E, the second layer 2E, the third layer 3E, and the fourth layer 4E. The other end 11Eb part of the interlayer film 11E is configured by the first layer 1E, the third layer 3E, and the fourth layer 4E.

On one surface side of the second layer 2E, the first layer 1E is arranged. On the other surface side of the second layer 2E, the fourth layer 4E is arranged. The second layer 2E is embedded between the first layer 1E and the fourth layer 4E. The first layer 1E is a surface layer of the interlayer film 11E. The second layer 2E is an intermediate layer of the interlayer film 11E.

The third layer 3E is arranged on a surface side opposite to the first layer 1E of the fourth layer 4E to be layered thereon. The fourth layer 4E is arranged on a surface side opposite to the second layer 2E of the first layer 1E to be layered thereon. The fourth layer 4E is arranged on the surface of the first layer 1E to be layered thereon. The third layer 3E is a surface layer of the interlayer film 11E. The fourth layer 4E is an intermediate layer of the interlayer film 11E. The fourth layer 4E is a sound insulating layer.

The second layer 2E has only a non-gradation part 2EY. The non-gradation part 2EY is a part where the thickness of the second layer 2E is uniform.

In the interlayer film 11E, the region from the one end 11Ea to the other end 11Eb is a colored region R. The colored region R has a first non-gradation region RY, and a second non-gradation region RZ. The first non-gradation region RY is located closer to the one end 11Ea than the second non-gradation region RZ. Each of the colored region R, the first non-gradation region RY, and the second non-gradation region RZ is set by preparing the above-described laminated glass X and measuring the visible light transmittance of the laminated glass X.

The first non-gradation region RY of the interlayer film 11E is a region where the first layer 1E, the non-gradation part 2EY of the second layer 2E, the third layer 3E, and the fourth layer 4E exist in the thickness direction of the interlayer film 11E. The second non-gradation region RZ of the interlayer film 11E is a region where the first layer 1E, the third layer 3E, and the fourth layer 4E exist in the thickness direction of the interlayer film 11E. The second non-gradation region RZ of the interlayer film 11E is a region where the second layer 2E does not exist in the thickness direction of the interlayer film 11E.

Fig. 12 is a sectional view along the thickness direction of a laminated glass 31E. The laminated glass 31E includes the first lamination glass member 21, the second lamination glass member 22 and the interlayer film 11E. The interlayer film 11E is arranged between the first lamination glass member 21 and the second lamination glass member 22. The first lamination glass member 21 is arranged on a first surface side of the interlayer film 11E to be layered thereon. The second lamination glass member 22 is arranged on a second surface side opposite to the first surface of the interlayer film 11E to be layered thereon.

The laminated glass 31E has one end 31Ea, and the other end 31Eb. The one end 31Ea and the other end 31Eb are end parts of both sides facing each other. In the laminated glass 31E, the region from the one end 31Ea to the other end 31Eb is a colored region R. The colored region R has a first non-gradation region RY, and a second non-gradation region RZ. The first non-gradation region RY is located closer to the one end 31Ea than the second non-gradation region RZ.

The first non-gradation region RY of the laminated glass 31E is a region where the first lamination glass member 21, the second lamination glass member 22, the first layer 1E, the non-gradation part 2EY of the second layer 2E, the third layer 3E, and the fourth layer 4E exist in the thickness direction of the laminated glass 31E. The second non-gradation region RZ of the laminated glass 31E is a region where the first lamination glass member 21, the second lamination glass member 22, the first layer 1E, the third layer 3E, and the fourth layer 4E exist in the thickness direction of the laminated glass 31E. The second non-gradation region RZ of the laminated glass 31E is a region where the second layer 2E does not exist in the thickness direction of the laminated glass 31E.

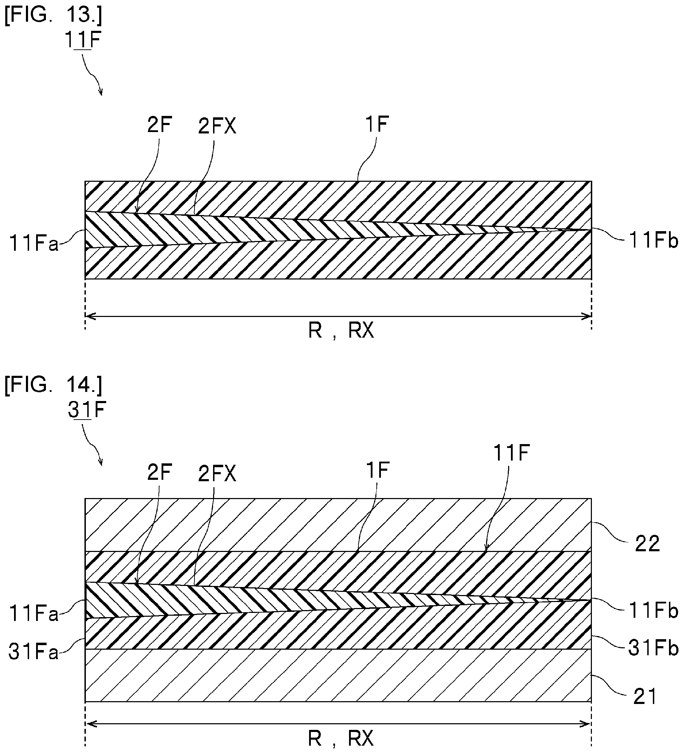

Fig. 13 is a sectional view schematically showing an interlayer film for a laminated glass in accordance with a seventh embodiment of the present invention. Fig. 14 is a sectional view schematically showing a laminated glass prepared with the interlayer film for a laminated glass shown in Fig. 13.

The interlayer film 11F includes a first layer 1F containing a coloring agent, and a second layer 2F containing a coloring agent. The second layer 2F reaches the one end 11Fa of the interlayer film 11F. The second layer 2F reaches the other end 11Fb of the interlayer film 11F. The one end 11Fa part and the other end 11Fb part of the interlayer film 11F are configured by three layers of the two first layers 1F, and the second layer 2F.

On both surface sides of the second layer 2F, the first layer 1F is arranged. The two first layers 1F are surface layers of the interlayer film 11F. The second layer 2F is an intermediate layer of the interlayer film 11F.

The second layer 2F has only a gradation part 2FX where visible light transmittance increases from the one end 11Fa side toward the other end 11Fb side of the interlayer film 11F. The gradation part 2FX is a part where the thickness of the second layer 2F decreases from the one end 11Fa side toward the other end 11Fb side of the interlayer film 11F.

In the interlayer film 11F, the region from the one end 11Fa to the other end 11Fb is a colored region R. The colored region R has only the gradation region RX. Each of the colored region R and the gradation region RX is set by preparing the above-described laminated glass X and measuring the visible light transmittance of the laminated glass X.

The gradation region RX of the interlayer film 11F is a region where the two first layers 1F and the second layer 2F exist in the thickness direction of the interlayer film 11F.

Fig. 14 is a sectional view along the thickness direction of a laminated glass 31F. The laminated glass 31F includes the first lamination glass member 21, the second lamination glass member 22 and the interlayer film 11F. The interlayer film 11F is arranged between the first lamination glass member 21 and the second lamination glass member 22. The first lamination glass member 21 is arranged on a first surface side of the interlayer film 11F to be layered thereon. The second lamination glass member 22 is arranged on a second surface side opposite to the first surface of the interlayer film 11F to be layered thereon.

The laminated glass 31F has one end 31Fa, and the other end 31Fb. The one end 31Fa and the other end 31Fb are end parts of both sides facing each other. In the laminated glass 31F, the region from the one end 31Fa to the other end 31Fb is a colored region R. The colored region R has only the gradation region RX.

The gradation region RX of the laminated glass 31F is a region where the first lamination glass member 21, the second lamination glass member 22, the two first layers 1F, and the second layer 2F exist in the thickness direction of the laminated glass 31F.

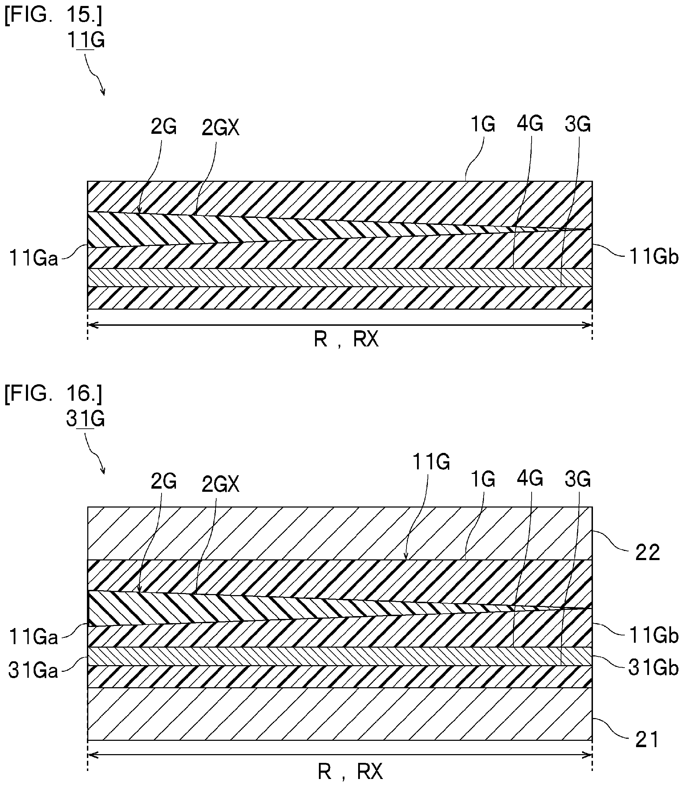

Fig. 15 is a sectional view schematically showing an interlayer film for a laminated glass in accordance with an eighth embodiment of the present invention. Fig. 16 is a sectional view schematically showing a laminated glass prepared with the interlayer film for a laminated glass shown in Fig. 15.

Fig. 15 is a sectional view along the thickness direction of an interlayer film 11G. The interlayer film 11G has one end 11Ga, and the other end 11Gb. The one end 11Ga and the other end 11Gb are end parts of both sides facing each other.

The interlayer film 11G includes a first layer 1G containing a coloring agent, a second layer 2G containing a coloring agent, a third layer 3G containing a coloring agent, and a fourth layer 4G not containing a coloring agent. The second layer 2G reaches the one end 11Ga of the interlayer film 11G. The second layer 2G reaches the other end 11Gb of the interlayer film 11G. The one end 11Ga part and the other end 11Gb part of the interlayer film 11G are configured by five layers of the two first layers 1G, the second layer 2G, the third layer 3G and the fourth layer 4G.

On both surface sides of the second layer 2G, the first layer 1G is arranged. One of the first layers 1G is a surface layer of the interlayer film 11G. The second layer 2G is an intermediate layer of the interlayer film 11G.

The third layer 3G is arranged on a surface side opposite to the first layer 1G of the fourth layer 4G to be layered thereon. The fourth layer 4G is arranged on a surface side opposite to the second layer 2G of the first layer 1G to be layered thereon. The third layer 3G is a surface layer of the interlayer film 11G. The fourth layer 4G is an intermediate layer of the interlayer film 11G. The fourth layer 4G is a sound insulating layer.

The second layer 2G has only a gradation part 2GX where visible light transmittance increases from the one end 11Ga side toward the other end 11Gb side of the interlayer film 11G. The gradation part 2GX is a part where the thickness of the second layer 2G decreases from the one end 11Ga side toward the other end 11Gb side of the interlayer film 11G.

In the interlayer film 11G, the region from the one end 11Ga to the other end 11Gb is a colored region R. The colored region R has only the gradation region RX. Each of the colored region R and the gradation region RX is set by preparing the above-described laminated glass X and measuring the visible light transmittance of the laminated glass X.

The gradation region RX of the interlayer film 11G is a region where the two first layers 1G, the second layer 2G, the third layer 3G and the fourth layer 4G exist in the thickness direction of the interlayer film 11G.

Fig. 16 is a sectional view along the thickness direction of a laminated glass 31G. The laminated glass 31G includes the first lamination glass member 21, the second lamination glass member 22 and the interlayer film 11G. The interlayer film 11G is arranged between the first lamination glass member 21 and the second lamination glass member 22. The first lamination glass member 21 is arranged on a first surface side of the interlayer film 11G to be layered thereon. The second lamination glass member 22 is arranged on a second surface side opposite to the first surface of the interlayer film 11G to be layered thereon.

The laminated glass 31G has one end 31Ga, and the other end 31Gb. The one end 31Ga and the other end 31Gb are end parts of both sides facing each other. In the laminated glass 31G, the region from the one end 31Ga to the other end 31Gb is a colored region R. The colored region R has only the gradation region RX.

The gradation region RX of the laminated glass 31G is a region where the first lamination glass member 21, the second lamination glass member 22, the two first layers 1G, the second layer 2G, the third layer 3G, and the fourth layer 4G exist in the thickness direction of the laminated glass 31G.

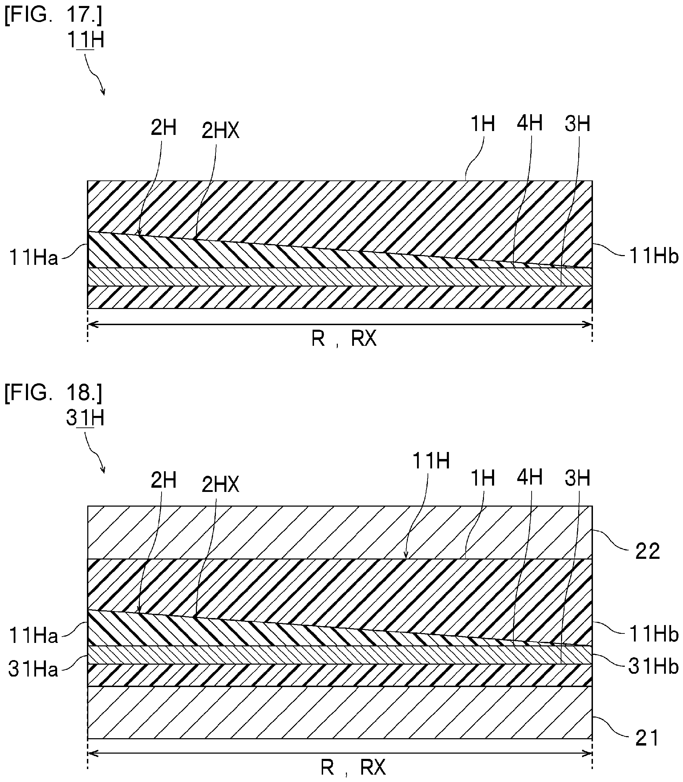

Fig. 17 is a sectional view schematically showing an interlayer film for a laminated glass in accordance with a ninth embodiment of the present invention. Fig. 18 is a sectional view schematically showing a laminated glass prepared with the interlayer film for a laminated glass shown in Fig. 17.

Fig. 17 is a sectional view along the thickness direction of an interlayer film 11H. The interlayer film 11H has one end 11Ha, and the other end 11Hb. The one end 11Ha and the other end 11Hb are end parts of both sides facing each other.

The interlayer film 11H includes a first layer 1H containing a coloring agent, a second layer 2H containing a coloring agent, a third layer 3H containing a coloring agent, and a fourth layer 4H not containing a coloring agent. The second layer 2H reaches the one end 11Ha of the interlayer film 11H. The second layer 2H reaches the other end 11Hb of the interlayer film 11H. The one end 11Ha part and the other end 11Hb part of the interlayer film 11H are configured by the first layer 1H, the second layer 2H, the third layer 3H and the fourth layer 4H.

On one surface side of the second layer 2H, the first layer 1H is arranged. On the other surface side of the second layer 2H, the fourth layer 4H is arranged. The second layer 2H is embedded between the first layer 1H and the fourth layer 4H. The first layer 1H is a surface layer of the interlayer film 11H. The second layer 2H is an intermediate layer of the interlayer film 11H.

The third layer 3H is arranged on a surface side opposite to the first layer 1H of the fourth layer 4H to be layered thereon. The fourth layer 4H is arranged on a surface side opposite to the second layer 2H of the first layer 1H to be layered thereon. The third layer 3H is a surface layer of the interlayer film 11H. The fourth layer 4H is an intermediate layer of the interlayer film 11H. The fourth layer 4H is a sound insulating layer.

The second layer 2H has only a gradation part 2HX where visible light transmittance increases from the one end 11Ha side toward the other end 11Hb side of the interlayer film 11H. The gradation part 2HX is a part where the thickness of the second layer 2H decreases from the one end 11Ha side toward the other end 11Hb side of the interlayer film 11H.

In the interlayer film 11H, the region from the one end 11Ha to the other end 11Hb is a colored region R. The colored region R has only the gradation region RX. Each of the colored region R and the gradation region RX is set by preparing the above-described laminated glass X and measuring the visible light transmittance of the laminated glass X.

The gradation region RX of the interlayer film 11H is a region where the first layer 1H, the second layer 2H, the third layer 3H and the fourth layer 4H exist in the thickness direction of the interlayer film 11H.

Fig. 18 is a sectional view along the thickness direction of a laminated glass 31H. The laminated glass 31H includes the first lamination glass member 21, the second lamination glass member 22 and the interlayer film 11H. The interlayer film 11H is arranged between the first lamination glass member 21 and the second lamination glass member 22. The first lamination glass member 21 is arranged on a first surface side of the interlayer film 11H to be layered thereon. The second lamination glass member 22 is arranged on a second surface side opposite to the first surface of the interlayer film 11H to be layered thereon.

The laminated glass 31H has one end 31Ha, and the other end 31Hb. The one end 31Ha and the other end 31Hb are end parts of both sides facing each other. In the laminated glass 31H, the region from the one end 31Ha to the other end 31Hb is a colored region R. The colored region R has only the gradation region RX.

The gradation region RX of the laminated glass 31H is a region where the first lamination glass member 21, the second lamination glass member 22, the first layer 1H, the second layer 2H, the third layer 3H, and the fourth layer 4H exist in the thickness direction of the laminated glass 31H.

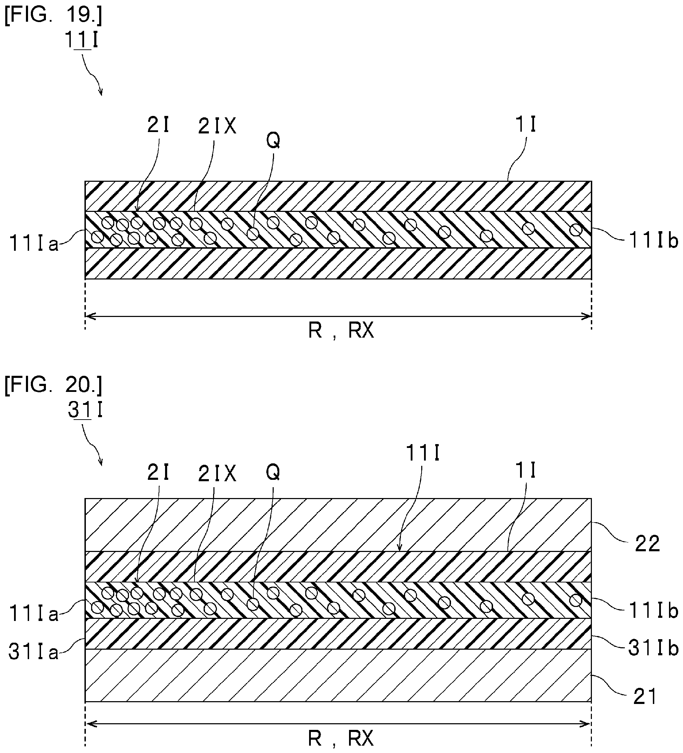

Fig. 19 is a sectional view schematically showing an interlayer film for a laminated glass in accordance with a tenth embodiment of the present invention. Fig. 20 is a sectional view schematically showing a laminated glass prepared with the interlayer film for a laminated glass shown in Fig. 19.

In Fig. 19 and Fig. 20, a coloring agent Q contained in the second layer is schematically shown, and abundance of the coloring agent Q is schematically shown. When the coloring agent is particulate, the actual size of the coloring agent is significantly smaller than the size shown in Fig. 19 and Fig. 20. In Fig. 19 and Fig. 20, illustration of a coloring agent contained in the first layer is omitted. In the sectional views of interlayer films for a laminated glass and laminated glasses other than Fig. 19 and Fig. 20, illustration of a coloring agent is omitted.

Fig. 19 is a sectional view along the thickness direction of an interlayer film 11I. The interlayer film 11I has one end 11Ia, and the other end 11Ib. The one end 11Ia and the other end 11Ib are end parts of both sides facing each other.

The interlayer film 11I includes a first layer 1I containing a coloring agent, and a second layer 2I containing the coloring agent Q. The second layer 2I reaches the one end 11Ia of the interlayer film 11I. The second layer 2I reaches the other end 11Ib of the interlayer film 11I. The one end 11Ia part and the other end 11Ib part of the interlayer film 11I are configured by three layers of the two first layers 1I, and the second layer 2I.

On both surface sides of the second layer 2I, the first layer 1I is arranged. The two first layers 1I are surface layers of the interlayer film 11I. The second layer 2I is an intermediate layer of the interlayer film 11I.

The second layer 2I has only a gradation part 2IX. The gradation part 2IX is a part where the concentration of the coloring agent Q in the second layer 2I decreases from the one end 11Ia side toward the other end 11Ib side of the interlayer film 11I.

In the interlayer film 11I, the region from the one end 11Ia to the other end 11Ib is a colored region R. The colored region R has only the gradation region RX. Each of the colored region R and the gradation region RX is set by preparing the above-described laminated glass X and measuring the visible light transmittance of the laminated glass X.

The gradation region RX of the interlayer film 11I is a region where the two first layers 1I and the second layer 2I exist in the thickness direction of the interlayer film 11I.

Fig. 20 is a sectional view along the thickness direction of a laminated glass 31I. The laminated glass 31I includes the first lamination glass member 21, the second lamination glass member 22 and the interlayer film 11I. The interlayer film 11I is arranged between the first lamination glass member 21 and the second lamination glass member 22. The first lamination glass member 21 is arranged on a first surface side of the interlayer film 11I to be layered thereon. The second lamination glass member 22 is arranged on a second surface side opposite to the first surface of the interlayer film 11I to be layered thereon.

The laminated glass 31I has one end 31Ia, and the other end 31Ib. The one end 31Ia and the other end 31Ib are end parts of both sides facing each other. In the laminated glass 31I, the region from the one end 31Ia to the other end 31Ib is a colored region R. The colored region R has only the gradation region RX.

The gradation region RX of the laminated glass 31I is a region where the first lamination glass member 21, the second lamination glass member 22, the two first layers 1I, and the second layer 2I exist in the thickness direction of the laminated glass 31I.

As with the interlayer film 11I and the laminated glass 31I, the gradation region may be formed resulting from the variation in concentration of the coloring agent. The gradation region may be formed resulting from the variation in thickness of the layer containing the coloring agent.

Hereinafter, other details of members constituting the interlayer film and the laminated glass are described.

### (Interlayer film for a laminated glass)

The interlayer film has a one-layer structure or a two or more-layer structure. The interlayer film may have a one-layer structure, a two-layer structure, a two or more-layer structure, a three-layer structure, a three or more-layer structure, a four or more-layer structure, a five or more-layer structure, or a six or more-layer structure.

The structure of the interlayer film may partially vary. For example, the interlayer film may have a part having a one-layer structure, and a part having a two or more-layer structure. The interlayer film may have a part having a one-layer structure, and a part having a three or more-layer structure. The interlayer film may have a part having a two-layer structure, and a part having a three or more-layer structure. When the interlayer film has a two or more-layer structure, the whole interlayer film need not have a two or more-layer structure, and the interlayer film may partly have a one-layer structure in the direction perpendicular to the thickness direction of the interlayer film.

It is preferred that the interlayer film include the first layer and the second layer, and the first layer be arranged on a first surface side of the second layer. The first layer preferably contains a coloring agent, and more preferably contains a resin and a coloring agent. The second layer preferably contains a coloring agent, and more preferably contains a resin and a coloring agent.

From the viewpoint of suppressing degradation in color tone, in the interlayer film, it is preferred that the first layer be arranged on a second surface side opposite to the first surface side of the second layer. From the viewpoint of suppressing degradation in color tone, it is preferred that the second layer be embedded in the first layer.

From the viewpoint of suppressing degradation in color tone, in the interlayer film, it is preferred that the first layer be arranged on the first surface side of the second layer, and the first layer be arranged on the second surface side of the second layer. From the viewpoint of suppressing degradation in color tone, it is preferred that the second layer be arranged between the first layers.

It is preferred that the interlayer film include the first layer, the second layer and the third layer, the first layer be arranged on a first surface side of the second layer, and the third layer be arranged on a second surface side opposite to the first surface of the second layer. In this case, between the third layer and the second layer, the first layer may be arranged, the fourth layer may be arranged, or the first layer and the fourth layer may be arranged. Also, in this case, the third layer preferably contain a coloring agent, and more preferably contain a resin and a coloring agent.

It is preferred that the interlayer film include the first layer, the second layer, the third layer, and the fourth layer, the first layer be arranged on a first surface side of the second layer, the fourth layer be arranged on a second surface side opposite to the first surface of the second layer, and the third layer be arranged on a surface side opposite to the first layer of the fourth layer. In this case, it is also preferred that the second layer be embedded in the first layer, the fourth layer be arranged on a first surface side of the first layer, and the third layer be arranged on a surface side opposite to the first layer of the fourth layer.

Also, in the interlayer film, for example, a functional film such as an infrared reflecting film or the like may be arranged. In the interlayer film, for example, a functional film such as an infrared reflecting film may be arranged between the first layer and the fourth layer.

The first layer, the second layer, the third layer and the fourth layer may have the same configuration, or may have different compositions.

The fourth layer may be, but not limited to, a layer having excellent sound insulating property. The fourth layer may be a sound insulating layer. When the fourth layer is a sound insulating layer, it is possible to improve the sound insulating property, the unity of appearance and the appearance designability of the laminated glass.

Hereinafter, the details of the interlayer film are further described.

### <Resin>

It is preferred that the interlayer film contain a resin. It is preferred that the first layer contain a resin. It is preferred that the second layer contain a resin. It is preferred that the third layer contain a resin. It is preferred that the fourth layer contain a resin. Examples of the resin include thermosetting resins and thermoplastic resins, and the like. One kind of the resin may be used alone, and two or more kinds thereof may be used in combination.

Examples of the thermoplastic resin include a polyvinyl acetal resin, a polyester resin, an ethylene-vinyl acetate copolymer resin, an ethylene-acrylic acid copolymer resin, a polyurethane resin, a polyvinyl alcohol resin, and the like. Thermoplastic resins other than these may be used.

### <Plasticizer>

It is preferred that the interlayer film contain a plasticizer. It is preferred that the first layer contain a plasticizer. It is preferred that the second layer contain a plasticizer. It is preferred that the third layer contain a plasticizer. It is preferred that the fourth layer contain a plasticizer. When the thermoplastic resin contained in the interlayer film is a polyvinyl acetal resin, it is especially preferred that the interlayer film (the respective layers) contain a plasticizer. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers and organic phosphite plasticizers, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

### [Chemical 1]

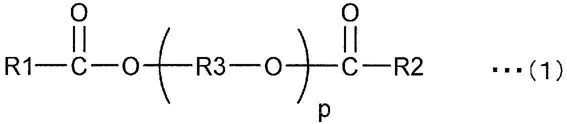

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate (3GO).

In the interlayer film, a content of the plasticizer relative to 100 parts by weight of the resin (when the resin is thermoplastic resin, 100 parts by weight of the thermoplastic resin; when the resin is polyvinyl acetal resin, 100 parts by weight of the polyvinyl acetal resin) is referred to as content (0). The content (0) is preferably 25 parts by weight or more, more preferably 30 parts by weight or more, and is preferably 100 parts by weight or less, more preferably 60 parts by weight or less, further preferably 50 parts by weight or less. When the content (0) is the above lower limit or more, the penetration resistance of laminated glass is further enhanced. When the content (0) is the above upper limit or less, the transparency of the interlayer film is further enhanced.

### <Coloring agent>

It is preferred that the interlayer film contain a coloring agent. It is preferred that the first layer contain a coloring agent. It is preferred that the second layer contain a coloring agent. The third layer may contain or need not contain a coloring agent. The fourth layer may contain or need not contain a coloring agent. It is preferred that at least one of the first layer and the second layer contain a coloring agent. It is preferred that both of the first layer and the second layer contain a coloring agent.

Examples of the coloring agent include inorganic particles, a dye, a pigment and the like. One kind of the coloring agent may be used alone and two or more kinds thereof may be used in combination.

Examples of the inorganic particles include carbon black particles, carbon nanotube particles, graphene particles, iron oxide particles, zinc oxide particles, calcium carbonate particles, alumina particles, kaolin clay particles, calcium silicate particles, magnesium oxide particles, magnesium hydroxide particles, aluminum hydroxide particles, magnesium carbonate particles, talc particles, feldspar powder particles, mica particles, barite particles, barium carbonate particles, titanium oxide particles, silica particles, and glass beads, and the like. One kind of the inorganic particles may be used alone, and two or more kinds thereof may be used in combination.

The inorganic particles include, preferably carbon black particles, carbon nanotube particles, graphene particles, calcium carbonate particles, titanium oxide particles or silica particles, more preferably carbon black particles or calcium carbonate particles, further preferably carbon black particles. By using these preferred inorganic particles, unevenness in appearance is suppressed when the light penetrates, and laminated glass having still further excellent appearance designability is obtained.

The average particle diameter of the inorganic particles is preferably 0.01 um or more, more preferably 0.5 um or more, and is preferably 100 um or less, more preferably 50 um or less, further preferably 10 um or less. The average particle diameter refers to the weight average particle diameter. The average particle diameter can be measured by a dynamic light scattering method with a light scattering measuring device and a laser as a light source. Examples of the light scattering measuring device include "DLS-6000AL" available from Otsuka Electronics Co., LTD., and the like.

Examples of the dye include a pyrene-based dye, an aminoketone-based dye, an anthraquinone-based dye, and an azo-based dye, and the like. One kind of the dye may be used alone, and two or more kinds thereof may be used in combination.

Examples of the pyrene-based dye include Solvent Green 5 (CAS79869-59-3) and Solvent Green 7 (CAS6358-69-6), and the like.

Examples of the aminoketone-based dye include Solvent Yellow 98 (CAS12671-74-8), Solvent Yellow 85 (CAS12271-01-1) and Solvent Red 179 (CAS8910-94-5), and Solvent Red 135 (CAS71902-17-5), and the like.

Examples of the anthraquinone-based dye include Solvent Yellow 163 (CAS13676091-0), Solvent Red 207 (CAS15958-69-6), Disperse Red 92 (CAS12236-11-2), Solvent Violet 13 (CAS81-48-1), Disperse Violet 31 (CAS6408-72-6), Solvent Blue 97 (CAS61969-44-6), Solvent Blue 45 (CAS37229-23-5), Solvent Blue 104 (CAS116-75-6) and Disperse Blue 214 (CAS104491-84-1), and the like.

Examples of the azo-based dye include Solvent Yellow30 (CAS3321-10-4), Solvent Red 164 (CAS70956-30-8), and Disperse Blue 146 (CAS88650-91-3), and the like.

The pigment may be an organic pigment and may be an inorganic pigment. The organic pigment may be an organic pigment having a metal atom, and may be an organic pigment not having a metal atom. One kind of the pigment may be used alone, and two or more kinds thereof may be used in combination.

Examples of the organic pigment include a phthalocyanine compound, a quinacridone compound, an azo compound, a pentaphene compound, a perylene compound, an indole compound and a dioxazine compound, and the like.

The first layer preferably contains carbon black particles, carbon nanotube particles, graphene particles, calcium carbonate particles, titanium oxide particles, silica particles, or a phthalocyanine compound, more preferably contains calcium carbonate particles or carbon black particles, and further preferably contains carbon black particles. The second layer preferably contains carbon black particles, carbon nanotube particles, graphene particles, calcium carbonate particles, titanium oxide particles, silica particles, or a phthalocyanine compound, more preferably contains calcium carbonate particles or carbon black particles, and further preferably contains carbon black particles. The third layer preferably contains carbon black particles, carbon nanotube particles, graphene particles, calcium carbonate particles, titanium oxide particles, silica particles, or a phthalocyanine compound, more preferably contains calcium carbonate particles or carbon black particles, and further preferably contains carbon black particles. By using these ingredients, unevenness in appearance is suppressed when the light penetrates, and laminated glass having still further excellent appearance designability is obtained.

When the interlayer film and the laminated glass Y have the first non-gradation region and the second non-gradation region, the total of the contents of the coloring agents contained in the layers constituting the first non-gradation region of the interlayer film is defined as content (Y), and the total of the contents of the coloring agents contained in the layers constituting the second non-gradation region of the interlayer film is defined as content (Z). A weight ratio of the content (Z) to the content (Y) (content (Z) / content (Y)) is preferably 0.15 or more, more preferably 0.2 or more, and is preferably 0.95 or less, more preferably 0.85 or less. When the weight ratio (content (Z) / content (Y)) is the above lower limit or more and the above upper limit or less, the absolute value of difference between the first visible light transmittance and the second visible light transmittance can be easily controlled, and the unity of appearance can be further enhanced.

### <Other ingredients>

Each of the interlayer film, the first layer, the second layer, the third layer, and the fourth layer may contain additives such as heat shielding particles, a light shielding agent, a coloring agent, a UV absorber, an oxidation inhibitor, an adhesive force adjusting agent, a light stabilizer, a flame retarder, an antistatic agent, a moisture-proof agent, a heat rays reflector and a heat rays absorber, and the like, as necessary. One kind of the additives may be used alone and two or more kinds thereof may be used in combination.

The first layer may contain heat shielding particles. The second layer may contain heat shielding particles. The third layer may contain heat shielding particles. The fourth layer may contain heat shielding particles. It is preferred that at least one of layers constituting the colored region of the interlayer film contain heat shielding particles. The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays. Since the interlayer film contains heat shielding particles, it is possible to improve the heat shielding property and the appearance designability of the laminated glass.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. One kind of the heat shielding particles may be used alone, and two or more kinds thereof may be used in combination.

The average particle diameter of the heat shielding particles is preferably 10 nm or more, more preferably 20 nm or more, and is preferably 100 nm or less, more preferably 80 nm or less, further preferably 50 nm or less. When the average particle diameter is the above lower limit or more, it is possible to sufficiently enhance the heat ray shielding property. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

### <Combination with other functional film>

The interlayer film may include other functional film for the purpose of realizing other function. Examples of the functional film include an infrared reflective film, a colored film, and a film with design printing, and the like. For example, in order to enhance the heat shielding property, the interlayer film may include an infrared reflective film. For example, in order to further improve the designability, or combine with other pattern, the interlayer film may include a colored film, or may include a film with design printing.

In the interlayer film including a functional film, for example, it is preferred that the first layer and the second layer be arranged on a first surface side of the functional film, the third layer be arranged on a second surface side opposite to the first surface of the functional film, and the second layer be arranged between the first layers. In the interlayer film including a functional film, the layer arranged on the first surface side of the functional film may be a single layer or may be multi-layered. In the interlayer film including a functional film, the layer arranged on the second surface side of the functional film may be a single layer or may be multi-layered. The interlayer film including a functional film may include the first layer, the second layer and the third layer, or may include the first layer, the second layer, the third layer and the fourth layer on the first surface side of the functional film. Also, the interlayer film including a functional film may include the third layer and the fourth layer on the second surface side of the functional film.

Examples of the infrared reflective film include a resin film with metal foil, a multilayer laminate film in which a metal layer and a dielectric layer are formed on a resin film, a multilayer resin film, and a liquid crystal film, and the like. These films have the property of reflecting infrared rays.

The resin film with metal foil includes a resin film, and a metal foil layered on the outer surface of the resin film. Examples of the material of the resin film include a polyethylene terephthalate resin, a polyethylene naphthalate resin, a polyvinyl acetal resin, an ethylene-vinyl acetate copolymer resin, an ethylene-acrylic acid copolymer resin, a polyurethane resin, a polyvinyl alcohol resin, a polyolefin resin, a polyvinyl chloride resin, and a polyimide resin. Examples of the material of the metal foil include aluminum, copper, silver, gold, palladium, and alloys containing these metals.

The multilayer laminate film in which a metal layer and a dielectric layer are formed on a resin film is a multilayer laminate film in which any number of layers of the metal layer and the dielectric layer are alternately layered on the resin film. In the multilayer laminate film in which a metal layer and a dielectric layer are formed on a resin layer, it is preferred that all of the metal layers and the dielectric layers be layered alternately, however, there may be a structural part in which a metal layer and a dielectric layer are not layered alternately as exemplified by metal layer/dielectric layer/metal layer/dielectric layer/metal layer/metal layer/dielectric layer/metal layer.

Examples of the material of the resin film in the multilayer laminate film include polyethylene, polypropylene, polylactic acid, poly(4-methylpentene-1), polyvinylidene fluoride, cyclic polyolefin, polymethyl methacrylate, polyvinyl chloride, polyvinyl alcohol, polyamide such as nylon 6, 11, 12, 66 and the like, polystyrene, polycarbonate, polyethylene terephthalate, polyethylene naphthalate, polyester, polyphenylene sulfide, and polyether imide. As the material of the metal layer in the multilayer laminate film, those exemplified as the material of the metal foil in the resin film with metal foil can be exemplified. A coating layer of metal or a mixed oxide of metal can be given to both faces or either face of the metal layer. Examples of the material of the coating layer include ZnO, Al₂O₃, Ga₂O₃, InO₃, MgO, Ti, NiCr and Cu. Also, examples of the dielectric layer in the multilayer laminate film include indium oxide.

The multilayer resin film is a laminate film in which a plurality of resin films are layered. As the material of the multilayer resin film, those exemplified as the material of the resin film in the multilayer laminate film can be exemplified. The number of layered resin films in the multilayer resin film is 2 or more, and may be 3 or more, and may be 5 or more. The number of layered resin films in the multilayer resin film may be 1000 or less, and may be 100 or less, and may be 50 or less.

The multilayer resin film may be a multilayer resin film in which any number of layers of two or more kinds of thermoplastic resin films having different optical properties (refractive index) are layered alternately or randomly. Such a multilayer resin film is so configured that a desired infrared reflecting property is obtained.

As the liquid crystal film, a film in which any number of layers of cholesteric liquid crystal layers that reflect the light of any wavelength are layered can be recited. Such a liquid crystal film is so configured that desired infrared reflecting property is obtained.

The infrared reflective film may contain infrared reflective particles. The infrared reflective particles are particles having the infrared reflecting property, and for example, tabular particles having a thickness of 1 nm or more and 1000 um or less can be recited. For example, in the resin film in which silver nano tabular particles are dispersed, an infrared reflective film having infrared reflecting property is obtained by adjusting the thickness, the surface area and the arrangement state of the silver nano tabular particles.

### (First and second lamination glass members)

Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first and second lamination glass members be a glass plate or a PET (polyethylene terephthalate) film and the laminated glass include at least one glass plate as the first and second lamination glass members. It is especially preferred that both of the first and second lamination glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured plate glass, net plate glass, wired plate glass, green glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

Although respective thicknesses of the first lamination glass member and the second lamination glass member are not particularly limited, the thickness is preferably 1 mm or more and is preferably 5 mm or less. When the lamination glass member is a glass plate, the thickness of the glass plate is preferably 1 mm or more and is preferably 5 mm or less. When the lamination glass member is a PET film, the thickness of the PET film is preferably 0.03 mm or more and is preferably 0.5 mm or less.

The thickness of the first and second lamination glass members means an average thickness.

### (Other details of interlayer film and laminated glass)

The interlayer film has one end and the other end being at an opposite side of the one end. The one end and the other end are end parts of both sides facing each other in the interlayer film. The interlayer film may be an interlayer film in which the thickness of the one end and the thickness of the other end are the same, or may be an interlayer film in which the thickness of the other end is larger than the thickness of the one end, or may be an interlayer film in which the thickness of the one end is larger than the thickness of the other end.

The maximum thickness of the interlayer film is preferably 0.1 mm or more, more preferably 0.25 mm or more, further preferably 0.5 mm or more, especially preferably 0.8 mm or more and is preferably 3.8 mm or less, more preferably 2 mm or less, further preferably 1.5 mm or less.

From the viewpoint of the practical aspect and the viewpoint of sufficiently enhancing the adhesive force and the penetration resistance, the maximum thickness of a surface layer of the interlayer film is preferably 0.001 mm or more, more preferably 0.2 mm or more, further preferably 0.3 mm or more, and is preferably 1 mm or less, and more preferably 0.8 mm or less.

From the viewpoint of the practical aspect and the viewpoint of sufficiently enhancing the penetration resistance, the maximum thickness of a layer (intermediate layer) arranged between two surface layers of the interlayer film is preferably 0.001 mm or more, more preferably 0.1 mm or more, and further preferably 0.2 mm or more and is preferably 0.8 mm or less, more preferably 0.6 mm or less, and further preferably 0.3 mm or less.

The interlayer film and the laminated glass according to the present invention can be used for automobiles, railway vehicles, aircraft, ships, buildings, and the like. The interlayer film and the laminated glass according to the present invention is preferably used in rear glass, roof glass or rear-roof integrated glass, and is more preferably used in rear-roof integrated glass.

As a method for producing the interlayer film, the following production method (1) and production method (2) and so on can be recited. The interlayer film may be produced by a production method other than these.

Production method (1): A composition for forming a first layer (a composition containing a coloring agent) from the first extruder, and a composition for forming a second layer (a composition containing a coloring agent) from the second extruder are co-extruded. In feeding the composition for forming a second layer from the second extruder, the pattern of gradation is controlled by a slit in a feed block disposed in front of the die. Regarding the slit, the slit thickness on at least one end is made small. The first layer and the second layer are joined in the feed block to give an interlayer film having a specific second layer.

Production method (2) : A composition for forming a first layer and a third layer (a composition containing a coloring agent) from the first extruder, a composition for forming a second layer (a composition containing a coloring agent) from the second extruder, and a composition for forming a fourth layer (a composition not containing a coloring agent) from the third extruder are co-extruded. The composition for forming a first layer and a third layer extruded from the first extruder is diverted at the feed block disposed in front of the die, and respectively arranged in positions of surface layers. In feeding the composition for forming a second layer from the second extruder, the pattern of gradation is controlled by a slit in a feed block disposed in front of the die. Regarding the slit, the slit thickness on at least one end is made small. The first layer, the second layer, the third layer, and the fourth layer are joined in the feed block to give an interlayer film having a specific second layer.

As a method for preparing the laminated glass, the following method can be recited.

The obtained interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first lamination glass member and the second lamination glass members and the interlayer film is removed. Then, the laminate is preliminarily bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained.

Hereinafter, the present invention will be described in more detail with reference to examples and comparative examples. The present invention is not limited only to these examples.

In polyvinyl acetal resins used, n-butyraldehyde that has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method conforming to JIS K6728 "Testing methods for polyvinyl butyral" were exhibited.

### (Example 1)

### Preparation of composition for forming first layer:

One hundred parts by weight of a polyvinyl butyral resin, 40 parts by weight of a plasticizer (3GO), and 0.022 parts by weight of carbon black particles (coloring agent) were mixed and sufficiently kneaded with a mixing roll to obtain a composition for forming a first layer.

### Preparation of composition for forming second layer:

One hundred parts by weight of a polyvinyl butyral resin, 40 parts by weight of a plasticizer (3GO) and 0.331 parts by weight of carbon black particles (coloring agent) were mixed and sufficiently kneaded with a mixing roll to obtain a composition for forming a second layer.

### Preparation of interlayer film:

The interlayer film having the configuration shown in Fig. 1 was prepared in the following manner.

The composition for forming a first layer from the first extruder, and the composition for forming a second layer from the second extruder were co-extruded. In feeding the composition for forming a second layer from the second extruder, the pattern of gradation was controlled by a slit in a feed block disposed in front of the die. Regarding the slit, the slit thickness on at least one of ends was made small. The first layer and the second layer were joined in the feed block to obtain an interlayer film. The extrusion temperature was 200°C.

The distance in the direction connecting the one end and the other end of the interlayer film (length in the width direction, described as "length (distance between one end and other end)" in Table) was 200 cm. The distance in the direction perpendicular to the direction connecting the one end and the other end of the interlayer film (width direction) was 50 cm. In the plane direction of the interlayer film, the length of the non-gradation part of the second layer, and the length of the gradation part of the second layer are respectively set as shown in the following Table 1.

### Preparation of laminated glass:

Two sheets of clear glass in conformity with JIS R3202:1996 (2 mm in thickness, 200 cm in length, 50 cm in width) were prepared. Between these two sheets of clear glass, the obtained interlayer film was sandwiched so that the longitudinal direction of the clear glass coincided with the direction connecting the one end and the other end of the interlayer film, and the transverse direction of the clear glass coincided with the direction perpendicular to the direction connecting the one end and the other end of the interlayer film. Then, the resultant laminate was retained at 90°C for 30 minutes and vacuum-pressed with a vacuum laminator, to obtain a laminated glass. The obtained laminated glass corresponds also to the aforementioned laminated glass X.

### (Examples 2 to 4)

The interlayer film and the laminated glass were prepared in the same manner as in Example 1 except that the content of the coloring agent and the configuration of the interlayer film were changed to those shown in Tables 1, 2.

### (Example 5)

The interlayer film and the laminated glass were prepared in the same manner as in Example 1 except that calcium carbonate particles were used as a coloring agent in a content shown in Table 2, and the configuration of the interlayer film was changed to that shown in Table 2.

### (Example 6)

### Preparation of composition for forming first layer and third layer:

One hundred parts by weight of a polyvinyl butyral resin, 40 parts by weight of a plasticizer (3GO) and 0.027 parts by weight of carbon black particles (coloring agent) were mixed and sufficiently kneaded with a mixing roll to obtain a composition for forming a first layer and a third layer.

### Preparation of composition for forming second layer:

One hundred parts by weight of a polyvinyl butyral resin, 40 parts by weight of a plasticizer (3GO) and 0.340 parts by weight of carbon black particles (coloring agent) were mixed and sufficiently kneaded with a mixing roll to obtain a composition for forming a second layer.

### Preparation of composition for forming fourth layer:

One hundred parts by weight of a polyvinyl butyral resin, and 60 parts by weight of a plasticizer (3GO) were mixed and sufficiently kneaded with a mixing roll to obtain a composition for forming a fourth layer.

### Preparation of interlayer film:

The interlayer film having the configuration shown in Fig. 3 was prepared in the following manner.

A composition for forming a first layer and a third layer (a composition containing a coloring agent) from the first extruder, a composition for forming a second layer (a composition containing a coloring agent) from the second extruder, and a composition for forming a fourth layer (a composition not containing a coloring agent) from the third extruder were co-extruded. The composition for forming a first layer and a third layer extruded from the first extruder was diverted at the feed block disposed in front of the die, and respectively arranged in positions of surface layers. In feeding the composition for forming a second layer from the second extruder, the pattern of gradation was controlled by a slit in a feed block disposed in front of the die. Regarding the slit, the slit thickness on at least one of ends was made small. The first layer, the second layer, the third layer and the fourth layer were joined in the feed block to obtain an interlayer film. The extrusion temperature was 200°C.

The distance in the direction connecting the one end and the other end of the interlayer film (length in the width direction, described as "length (distance between one end and other end)" in Table) was 200 cm. The distance in the direction perpendicular to the direction connecting the one end and the other end of the interlayer film (width direction) was 50 cm. In the plane direction of the interlayer film, the length of the non-gradation part of the second layer, and the length of the gradation part of the second layer are respectively set as shown in the following Table 3.

### Preparation of laminated glass:

Laminated glass was obtained in the same manner as that in Example 1 except that the obtained interlayer film was used. The obtained laminated glass corresponds also to the aforementioned laminated glass X.

### (Examples 7 to 16 and Comparative Examples 1, 2)

The interlayer film and the laminated glass were prepared in the same manner as in Example 6 except that the content of the coloring agent and the configuration of the interlayer film were changed to those shown in Tables 3 to 6. The content of the coloring agent to be used for forming a third layer was set to be equivalent with the content of the coloring agent to be used for forming a first layer. A coloring agent was not mixed in the fourth layer.

### (Example 17)

The interlayer film and the laminated glass were prepared in the same manner as in Example 1 except that the content of the coloring agent and the configuration of the interlayer film were changed to those shown in Table 6.

### (Examples 18 to 27)

The interlayer film and the laminated glass were prepared in the same manner as in Example 1 except that the content of the coloring agent, the configuration of the interlayer film, and the configuration of the laminated glass were changed to those shown in Tables 7 to 9.

### (Evaluation)

### (1) Visible light transmittance of laminated glass

The visible light transmittance at a wavelength ranging from 380 nm to 780 nm of the obtained laminated glass was measured by using a spectrophotometer ("U-4100" available from Hitachi High-Tech Science Corporation) in conformity with JIS R3106:1998.

For the obtained visible light transmittance of the laminated glass, the following values are respectively shown in the following Tables 1 to 9.

1) Plane area (%) of the colored region where visible light transmittance is 1% or more and 50% or less in 100% of the total plane area of the interlayer film, or in 100% of the total plane area of the laminated glass.
2) Plane area (%) of the first non-gradation region in 100% of the total plane area of the interlayer film, or in 100% of the total plane area of the laminated glass.
3) Plane area (%) of the gradation region in 100% of the total plane area of the interlayer film, or in 100% of the total plane area of the laminated glass.
4) Plane area (%) of the second non-gradation region in 100% of the total plane area of the interlayer film, or in 100% of the total plane area of the laminated glass.
5) First visible light transmittance (%) (visible light transmittance of laminated glass at a position of 5 cm from the one end toward the other end of the interlayer film or the laminated glass)
6) Second visible light transmittance (%) (visible light transmittance of the laminated glass at a position of 5 cm from the other end toward the one end of the interlayer film or the laminated glass)
7) Absolute value of difference between first visible light transmittance and second visible light transmittance (%)
8) Maximum value (%/mm) of absolute values of rate of change in visible light transmittance in the colored region from the one end toward the other end of the interlayer film or the laminated glass

### (2) Unity of appearance

A laminated glass was placed at an angle of 30 degrees with respect to the horizontal direction. Twenty evaluators visually observed the entire laminated glass at a distance of 3 m, and judged the unity of appearance according to the following criteria. The number of evaluators who judged as o was shown in Tables 1 to 9.

### [Criteria for judgment in unity of appearance]

o (good): The boundary where the color tone changes is less likely to be visible, and the laminated glass is visible in a unified appearance.
× (poor): The boundary where the color tone changes is easily visible, and the laminated glass is not visible in a unified appearance.

The configurations and the results of interlayer films and laminated glasses are shown in the following Tables 1 to 9. Regarding the kind of lamination glass member in Tables, the kind of the first lamination glass member / the kind of the second lamination glass member is shown. Regarding the thickness of the lamination glass member in Tables, the thickness of the first lamination glass member / the thickness of the second lamination glass member is shown. Regarding the kind of lamination glass member in Tables, "C" means clear glass, "G" means green glass, "A" means high transparency glass (Gorilla Glass available from Corning Incorporated), and "B" means borosilicate glass. Regarding the kind of coloring agent, "CB" means carbon black particles, "CCA" means calcium carbonate particles, "Pc" means phthalocyanine copper particles (Pigment Blue 15-1), and "P" means perylene particles (Pigment Red 149). In *1 in Tables, "plane area of colored region" indicates "plane area of colored region where visible light transmittance is 1% or more and 50% or less in 100% of total plane area". In *2 in Tables, "maximum value of absolute values of rate of change in visible light transmittance" indicates "maximum value of absolute values of rate of change in visible light transmittance in colored region from one end toward the other end". In *3 in Tables, "weight ratio of coloring agent between two regions" indicates "total of contents of coloring agents contained in layers constituting the second non-gradation region of the interlayer film / total of contents of coloring agents contained in layers constituting the first non-gradation region of the interlayer film".

**[Table 1]**

| | | Example 1 | Example 2 | Example 3 |
|---|---|---|---|---|
| Configuration of interlayer film | | Fig. 1 | Fig. 1 | Fig. 1 |
| Configuration of laminated glass | | Fig. 2 | Fig. 2 | Fig. 2 |
| Interlaye r film and laminated glass | Length (distance between one end and other end)(cm) | 200 | 200 | 200 |
| | Length of first non-gradation region (cm) Length of non-gradation part of second layer (cm) | 90 | 150 | 90 |
| | Length of gradation region (cm) Length of gradation part of second layer (cm) | 20 | 10 | 1 |
| | Length of second non-gradation region (cm) | 90 | 40 | 109 |
| | Plane area of colored region (%) *1 | 100 | 100 | 100 |
| | Plane area of first non-gradation region in 100% of total plane area (%) | 45 | 75 | 45 |
| | Plane area of gradation region in 100% of total plane area (%) | 10 | 5 | 0.5 |
| | Plane area of second non-gradation region in 100% of total plane area (%) | 45 | 20 | 54.5 |
| | First visible light transmittance (%) | 1 | 1 | 3 |
| | Second visible light transmittance (%) | 45 | 5 | 5 |
| | Absolute value of difference between first visible light transmittance and second visible light transmittance (%) | 44 | 4 | 2 |
| | Maximum value of absolute values of rate of change in visible light transmittance (%/mm) *2 | 0.1 | 0.2 | 1 |
| | Kind of lamination glass member | C/C | C/C | C/C |
| | Thickness of lamination glass member | 2 mm/2 mm | 2 mm/2 mm | 2 mm/2 mm |
| Interlaye r film | Kind of coloring agent contained in first layer | CB | CB | CB |
| | Content of coloring agent in composition for forming first layer (parts by weight) | 0.022 | 0.081 | 0.081 |
| | Kind of coloring agent contained in second layer | CB | CB | CB |
| | Content of coloring agent in composition for forming second layer (parts by weight) | 0.331 | 0.212 | 0.123 |
| | Weight ratio of coloring agent between two regions *3 | 0.17 | 0.65 | 0.85 |
| Evaluatio n | Unity of appearance (number of evaluators who judged as O (good) of 20 evaluators) | 14 | 18 | 20 |

**[Table 2]**

| | | Example 4 | Example 5 |
|---|---|---|---|
| Configuration of interlayer film | | Fig. 1 | Fig. 1 |
| Configuration of laminated glass | | Fig. 2 | Fig. 2 |
| Interlayer film and laminated glass | Length (distance between one end and other end)(cm) | 200 | 200 |
| | Length of first non-gradation region (cm) Length of non-gradation part of second layer (cm) | 90 | 150 |
| | Length of gradation region (cm) Length of gradation part of second layer (cm) | 1 | 10 |
| | Length of second non-gradation region (cm) | 109 | 40 |
| | Plane area of colored region (%) *1 | 100 | 100 |
| | Plane area of first non-gradation region in 100% of total plane area (%) | 45 | 75 |
| | Plane area of gradation region in 100% of total plane area (%) | 0.5 | 5 |
| | Plane area of second non-gradation region in 100% of total plane area (%) | 54.5 | 20 |
| | First visible light transmittance (%) | 1 | 1 |
| | Second visible light transmittance (%) | 45 | 10 |
| | Absolute value of difference between first visible light transmittance and second visible light transmittance (%) | 44 | 9 |
| | Maximum value of absolute values of rate of change in visible light transmittance (%/mm) *2 | 4.5 | 0.5 |
| | Kind of lamination glass member | C/C | C/C |
| | Thickness of lamination glass member | 2 mm/2 mm | 2 mm/2 mm |
| Interlayer film | Kind of coloring agent contained in first layer | CB | CCA |
| | Content of coloring agent in composition for forming first layer (parts by weight) | 0.022 | 2.870 |
| | Kind of coloring agent | CB | CCA |
| | contained in second layer | | |
| | Content of coloring agent in composition for forming second layer (parts by weight) | 0.331 | 11.479 |
| | Weight ratio of coloring agent between two regions *3 | 0.17 | 0.50 |
| Evaluation | Unity of appearance (number of evaluators who judged as O (good) of 20 evaluators) | 14 | 17 |

**[Table 3]**

| | | Example 6 | Example 7 | Example 8 | Example 9 |
|---|---|---|---|---|---|
| Configuration of interlayer film | | Fig. 3 | Fig. 3 | Fig. 3 | Fig. 3 |
| Configuration of laminated glass | | Fig. 4 | Fig. 4 | Fig. 4 | Fig. 4 |
| Interlayer film and laminated glass | Length (distance between one end and other end) (cm) | 200 | 200 | 200 | 200 |
| | Length of first non-gradation region (cm) Length of non-gradation part of second layer (cm) | 90 | 150 | 90 | 90 |
| | Length of gradation region (cm) Length of gradation part of second layer (cm) | 20 | 10 | 1 | 1 |
| | Length of second non-gradation region (cm) | 90 | 40 | 109 | 109 |
| | Plane area of colored region (%) *1 | 100 | 100 | 100 | 100 |
| | Plane area of first non-gradation region in 100% of total plane area (%) | 45 | 75 | 45 | 45 |
| | Plane area of gradation region in 100% of total plane area (%) | 10 | 5 | 0.5 | 0.5 |
| | Plane area of second non-gradation region in 100% of total plane area (%) | 45 | 20 | 54.5 | 54.5 |
| | First visible light transmittance (%) | 1 | 1 | 3 | 1 |
| | Second visible light transmittance (%) | 45 | 5 | 5 | 45 |
| | Absolute value of difference between first visible light transmittance and second visible light transmittance (%) | 44 | 4 | 2 | 44 |
| | Maximum value of absolute values of rate of change in visible light transmittance (%/mm) *2 | 1.1 | 0.2 | 1.1 | 4.5 |
| | Kind of lamination glass member | C/C | C/C | C/C | C/C |
| | Thickness of lamination glass member | 2 mm/2 mm | 2 mm/2 mm | 2 mm/2 mm | 2 mm/2 mm |
| Interlayer | Kind of coloring agent | CB | CB | CB | CB |
| film | contained in first layer | | | | |
| | Content of coloring agent in composition for forming first layer (parts by weight) | 0.027 | 0.101 | 0.101 | 0.027 |
| | Kind of coloring agent contained in second layer | CB | CB | CB | CB |
| | Content of coloring agent in composition for forming second layer (parts by weight) | 0.340 | 0.212 | 0.123 | 0.331 |
| | Weight ratio of coloring agent between two regions *3 | 0.17 | 0.65 | 0.85 | 0.17 |
| Evaluation | Unity of appearance (number of evaluators who judged as O (good) of 20 evaluators) | 14 | 18 | 20 | 14 |

**[Table 4]**

| | | Example 10 | Example 11 | Example 12 |
|---|---|---|---|---|
| Configuration of interlayer film | | Fig. 5 | Fig. 5 | Fig. 5 |
| Configuration of laminated glass | | Fig. 6 | Fig. 6 | Fig. 6 |
| Interlayer film and laminated glass | Length (distance between one end and other end)(cm) | 200 | 200 | 200 |
| | Length of first non-gradation region (cm) Length of non-gradation part of second layer (cm) | 90 | 150 | 90 |
| | Length of gradation region (cm) Length of gradation part of second layer (cm) | 20 | 10 | 1 |
| | Length of second non-gradation region (cm) | 90 | 40 | 109 |
| | Plane area of colored region (%) *1 | 100 | 100 | 100 |
| | Plane area of first non-gradation region in 100% of total plane area (%) | 45 | 75 | 45 |
| | Plane area of gradation region in 100% of total plane area (%) | 10 | 5 | 0.5 |
| | Plane area of second non-gradation region in 100% of total plane area (%) | 45 | 20 | 54.5 |
| | First visible light transmittance (%) | 1 | 1 | 3 |
| | Second visible light transmittance (%) | 45 | 5 | 5 |
| | Absolute value of difference between first visible light transmittance and second visible light transmittance (%) | 44 | 4 | 2 |
| | Maximum value of absolute values of rate of change in visible light transmittance (%/mm) *2 | 1.1 | 0.2 | 1.1 |
| | Kind of lamination | C/C | C/C | C/C |
| | glass member | | | |
| | Thickness of lamination glass member | 2 mm/2 mm | 2 mm/2 mm | 2 mm/2 mm |
| Interlayer film | Kind of coloring agent contained in first layer | CB | CB | CB |
| | Content of coloring agent in composition for forming first layer (parts by weight) | 0.027 | 0.101 | 0.101 |
| | Kind of coloring agent contained in second layer | CB | CB | CB |
| | Content of coloring agent in composition for forming second layer (parts by weight) | 0.331 | 0.212 | 0.123 |
| | Weight ratio of coloring agent between two regions *3 | 0.17 | 0.65 | 0.85 |
| Evaluation | Unity of appearance (number of evaluators who judged as O (good) of 20 evaluators) | 14 | 18 | 20 |

**[Table 5]**

| | | Example 13 | Example 14 | Example 15 |
|---|---|---|---|---|
| Configuration of interlayer film | | Fig. 5 | Fig. 5 | Fig. 5 |
| Configuration of laminated glass | | Fig. 6 | Fig. 6 | Fig. 6 |
| Interlayer film and laminated glass | Length (distance between one end and other end)(cm) | 200 | 200 | 100 |
| | Length of first non-gradation region (cm) Length of non-gradation part of second layer (cm) | 90 | 5 | 40 |
| | Length of gradation region (cm) Length of gradation part of second layer (cm) | 1 | 155 | 20 |
| | Length of second non-gradation region (cm) | 109 | 40 | 40 |
| | Plane area of colored region (%) *1 | 100 | 100 | 100 |
| | Plane area of first non-gradation region in 100% of total plane area (%) | 45 | 2.5 | 40 |
| | Plane area of gradation region in 100% of total plane area (%) | 0.5 | 77.5 | 20 |
| | Plane area of second non-gradation region in 100% of total plane area (%) | 54.5 | 20 | 40 |
| | First visible light transmittance (%) | 1 | 2 | 8 |
| | Second visible light transmittance (%) | 45 | 18 | 25 |
| | Absolute value of difference between first visible light transmittance and second visible light transmittance (%) | 44 | 16 | 17 |
| | Maximum value of absolute values of rate of change in visible light transmittance (%/mm) *2 | 4.5 | 0.1 | 0.5 |
| | Kind of lamination glass member | C/C | C/C | C/C |
| | Thickness of lamination | 2 mm/2 mm | 2 mm/ 2 | 2 mm/2 mm |
| | glass member | | mm | |
| Interlayer film | Kind of coloring agent contained in first layer | CB | CB | CB |
| | Content of coloring agent in composition for forming first layer (parts by weight) | 0.027 | 0.058 | 0.047 |
| | Kind of coloring agent contained in second layer | CB | CB | CB |
| | Content of coloring agent in composition for forming second layer (parts by weight) | 0.331 | 0.225 | 0.130 |
| | Weight ratio of coloring agent between two regions *3 | 0.17 | 0.44 | 0.55 |
| Evaluation | Unity of appearance (number of evaluators who judged as O (good) of 20 evaluators) | 14 | 20 | 20 |

**[Table 6]**

| | | Example 16 | Example 17 | Comparati ve Example 1 | Comparative Example 2 |
|---|---|---|---|---|---|
| Configuration of interlayer film | | Fig. 11 | Fig. 13 | Similar to Fig. 5 | Similar to Fig. 11 |
| Configuration of laminated glass | | Fig. 12 | Fig. 14 | Similar to Fig. 6 | Similar to Fig. 12 |
| Interlayer film and laminated glass | Length (distance between one end and other end)(cm) | 200 | 200 | 200 | 200 |
| | Length of first non-gradation region (cm) Length of non-gradation part of second layer (cm) | 90 | - | 90 | 90 |
| | Length of gradation region (cm) | - | 200 | 20 | - |
| | Length of gradation part of second layer (cm) | | | | |
| | Length of second non-gradation region (cm) | 110 | - | 90 | 110 |
| | Plane area of colored region (%) *1 | 100 | 100 | Less than 55% | 55 |
| | Plane area of first non-gradation region in 100% of total plane area (%) | 45 | - | 45 | 45 |
| | Plane area of gradation region in 100% of total plane area (%) | - | 100 | 10 | - |
| | Plane area of second non-gradation region in 100% of total plane area (%) | 55 | - | 45 | 55 |
| | First visible light transmittance (%) | 8 | 1 | 2 | 0 |
| | Second visible light transmittance (%) | 25 | 25 | 70 | 45 |
| | Absolute value of difference between first visible light transmittance and second visible light transmittance (%) | 17 | 24 | 68 | 45 |
| | Maximum value of absolute values of rate of change in visible light transmittance (%/mm) *2 | - | 0.1 | 1.7 | - |
| | Kind of lamination glass member | C/C | C/C | C/C | C/C |
| | Thickness of lamination glass member | 2 mm/2 mm | 2 mm/2 mm | 2 mm/2 mm | 2 mm/2 mm |
| Interlayer film | Kind of coloring agent contained in first layer | CB | CB | CB | CB |
| | Content of coloring agent in composition for forming first layer (parts by weight) | 0.047 | 0.038 | 0.012 | 0.027 |
| | Kind of coloring agent contained in second layer | CB | CB | CB | CB |
| | Content of coloring agent in composition for forming second layer (parts by weight) | 0.130 | 0.299 | 0.299 | 0.649 |
| | Weight ratio of coloring agent between two regions *3 | 0.55 | 0.30 | 0.09 | 0.09 or less |
| Evaluation | Unity of appearance (number of evaluators who judged as O (good) of 20 evaluators) | 10 | 20 | 0 | 0 |

**[Table 7]**

| | | Example 18 | Example 19 | Example 20 | Example 21 |
|---|---|---|---|---|---|
| Configuration of interlayer film | | Fig. 1 | Fig. 1 | Fig. 1 | Fig. 1 |
| Configuration of laminated glass | | Fig. 2 | Fig. 2 | Fig. 2 | Fig. 2 |
| Interlayer film and laminated glass | Length (distance between one end and other end)(cm) | 200 | 200 | 200 | 200 |
| | Length of first non-gradation region (cm) Length of non-gradation part of second layer (cm) | 90 | 90 | 150 | 90 |
| | Length of gradation region (cm) | 20 | 10 | 5 | 1 |
| | Length of gradation part of second layer (cm) | | | | |
| | Length of second non-gradation region (cm) | 90 | 100 | 45 | 109 |
| | Plane area of colored region (%) *1 | 100 | 100 | 100 | 100 |
| | Plane area of first non-gradation region in 100% of total plane area (%) | 45 | 45 | 75 | 45 |
| | Plane area of gradation region in 100% of total plane area (%) | 10 | 5 | 2.5 | 0.5 |
| | Plane area of second non-gradation region in 100% of total plane area (%) | 45 | 50 | 22.5 | 54.5 |
| | First visible light transmittance (%) | 12 | 7 | 10 | 7 |
| | Second visible light transmittance (%) | 25 | 15 | 25 | 18 |
| | Absolute value of difference between first visible light transmittance and second visible light transmittance (%) | 13 | 8 | 15 | 11 |
| | Maximum value of absolute values of rate of change in visible light transmittance (%/mm) *2 | 2.2 | 1.5 | 3 | 4 |
| | Kind of lamination glass member | C/C | C/C | C/C | C/C |
| | Thickness of lamination | 2 mm/2 mm | 2 mm/2 | 2 mm/2 | 2 mm/2 mm |
| | glass member | | mm | mm | |
| Interlayer film | Kind of coloring agent contained in first layer | Pc | Pc/P mixture | Pc/P mixture | Pc/P/CB mixture |
| | Content of coloring agent in composition for forming first layer (parts by weight) | 0.029 | 0.029(Pc ) | 0.011(Pc ) | 0.011(Pc) |
| | | | | | 0.014(P) |
| | | | 0.007(P) | 0.007(P) | 0.004(CB) |
| | Kind of coloring agent contained in second layer | Pc | Pc/P mixture | Pc/P/CB mixture | Pc/P/CB mixture |
| | Content of coloring agent in composition for forming second layer (parts by weight) | 0.104 | 0.104(PC ) | 0.043(Pc ) | 0.043(Pc) |
| | | | | 0.007(P) | 0.014(P) |
| | | | 0.007(P) | 0.021(CB ) | 0.025(CB) |
| | Weight ratio of coloring agent between two regions *3 | 0.53 | 0.59 | 0.50 | 0.62 |
| Evaluation | Unity of appearance (number of evaluators who judged as O (good) of 20 evaluators) | 20 | 18 | 17 | 14 |

**[Table 8]**

| | | Example 22 | Example 23 | Example 24 |
|---|---|---|---|---|
| Configuration of interlayer film | | Fig. 1 | Fig. 1 | Fig. 1 |
| Configuration of laminated glass | | Fig. 2 | Fig. 2 | Fig. 2 |
| Interlayer film and laminated glass | Length (distance between one end and other end)(cm) | 200 | 200 | 200 |
| | Length of first non-gradation region (cm) | 90 | 90 | 90 |
| | Length of non-gradation part of second layer (cm) | | | |
| | Length of gradation region (cm) Length of gradation part of second layer (cm) | 20 | 20 | 20 |
| | Length of second non-gradation region (cm) | 90 | 90 | 90 |
| | Plane area of colored region (%) *1 | 100 | 100 | 100 |
| | Plane area of first non-gradation region in 100% of total plane area (%) | 45 | 45 | 45 |
| | Plane area of gradation region in 100% of total plane area (%) | 10 | 10 | 10 |
| | Plane area of second non-gradation region in 100% of total plane area (%) | 45 | 45 | 45 |
| | First visible light transmittance (%) | 1 | 1 | 1 |
| | Second visible light transmittance (%) | 42 | 45 | 45 |
| | Absolute value of difference between first visible light transmittance and second visible light transmittance (%) | 41 | 44 | 45 |
| | Maximum value of absolute values of rate of change in visible light transmittance (%/mm) *2 | 0.1 | 0.1 | 0.1 |
| | Kind of lamination glass member | G/G | A/A | A/B |
| | Thickness of lamination | 2.6 mm/2.6 | 0.7 mm/0.7 | 0.7 mm/3.3 |
| | glass member | mm | mm | mm |
| Interlayer film | Kind of coloring agent contained in first layer | CB | CB | CB |
| | Content of coloring agent in composition for forming first layer (parts by weight) | 0.021 | 0.022 | 0.023 |
| | Kind of coloring agent contained in second layer | CB | CB | CB |
| | Content of coloring agent in composition for forming second layer (parts by weight) | 0.328 | 0.331 | 0.332 |
| | Weight ratio of coloring agent between two regions *3 | 0.17 | 0.17 | 0.17 |
| Evaluation | Unity of appearance (number of evaluators who judged as O (good) of 20 evaluators) | 14 | 14 | 14 |

**[Table 9]**

| | | Example 25 | Example 26 | Example 27 |
|---|---|---|---|---|
| Configuration of interlayer film | | Fig. 1 | Fig. 1 | Fig. 1 |
| Configuration of laminated glass | | Fig. 2 | Fig. 2 | Fig. 2 |
| Interlayer film and laminated glass | Length (distance between one end and other end)(cm) | 200 | 200 | 200 |
| | Length of first non-gradation region (cm) Length of non-gradation part of second layer (cm) | 90 | 90 | 90 |
| | Length of gradation region (cm) | 20 | 20 | 20 |
| | Length of gradation part of second layer (cm) | | | |
| | Length of second non-gradation region (cm) | 90 | 90 | 90 |
| | Plane area of colored region (%) *1 | 100 | 100 | 100 |
| | Plane area of first non-gradation region in 100% of total plane area (%) | 45 | 45 | 45 |
| | Plane area of gradation region in 100% of total plane area (%) | 10 | 10 | 10 |
| | Plane area of second non-gradation region in 100% of total plane area (%) | 45 | 45 | 45 |
| | First visible light transmittance (%) | 1 | 1 | 1 |
| | Second visible light transmittance (%) | 45 | 45 | 43 |
| | Absolute value of difference between first visible light transmittance and second visible light transmittance (%) | 45 | 44 | 42 |
| | Maximum value of absolute values of rate of change in visible light transmittance (%/mm) *2 | 0.1 | 0.1 | 0.1 |
| | Kind of lamination glass member | A/A | B/B | A/G |
| | Thickness of lamination | 0.7 mm/1.1 | 3.3 mm/3.3 | 0.7 mm/2.6 |
| | glass member | mm | mm | mm |
| Interlayer film | Kind of coloring agent contained in first layer | CB | CB | CB |
| | Content of coloring agent in composition for forming first layer (parts by weight) | 0.023 | 0.022 | 0.021 |
| | Kind of coloring agent contained in second layer | CB | CB | CB |
| | Content of coloring agent in composition for forming second layer (parts by weight) | 0.332 | 0.331 | 0.328 |
| | Weight ratio of coloring agent between two regions *3 | 0.17 | 0.17 | 0.17 |
| Evaluation | Unity of appearance (number of evaluators who judged as O (good) of 20 evaluators) | 14 | 14 | 15 |

### EXPLANATION OF SYMBOLS

1, 1A, 1B, 1C, 1D, 1E, 1F, 1G, 1H, 1I: First layer
2, 2A, 2B, 2C, 2D, 2E, 2F, 2G, 2H, 2I: Second layer
2X, 2AX, 2BX, 2FX, 2GX, 2HX, 2IX: Gradation part
2Y, 2AY, 2BY, 2CY, 2DY, 2EY: Non-gradation part
3A, 3B, 3D, 3E, 3G, 3H: Third layer
4A, 4B, 4D, 4E, 4G, 4H: Fourth layer
11, 11A, 11B, 11C, 11D, 11E, 11F, 11G, 11H, 11I: Interlayer film
11a, 11Aa, 11Ba, 11Ca, 11Da, 11Ea, 11Fa, 11Ga, 11Ha, 11Ia: One end (one end of interlayer film)
11b, 11Ab, 11Bb, 11Gb, 11Db, 11Eb, 11Fb, 11Gb, 11Hb, 11Ib: Other end (other end of interlayer film)
21: First lamination glass member
22: Second lamination glass member
31, 31A, 31B, 31C, 31D, 31E, 31F, 31G, 31H, 31I: Laminated glass
31a, 31Aa, 31Ba, 31Ca, 31Da, 31Ea, 31Fa, 31Ga, 31Ha, 31Ia: One end (one end of laminated glass)
31b, 31Ab, 31Bb, 31Cb, 31Db, 31Eb, 31Fb, 31Gb, 31Hb, 31Ib: Other end (other end of laminated glass)
Q: Coloring agent
R: Colored region
RX: Gradation region
RY: First non-gradation region
RZ: Second non-gradation region

## Claims

1. An interlayer film for a laminated glass having one end, and the other end being at an opposite side of the one end,
when the interlayer film is arranged between two sheets of clear glass conforming to JIS R3202:1996 to obtain a laminated glass X,
the interlayer film having a colored region where visible light transmittance of the laminated glass X is 1% or more and 50% or less,
the colored region having a plane area of 95% or more in 100% of a total plane area of the interlayer film,
the laminated glass X having a first visible light transmittance at a position of 5 cm from the one end toward the other end of the interlayer film, and a second visible light transmittance at a position of 5 cm from the other end toward the one end of the interlayer film, the first visible light transmittance being smaller than the second visible light transmittance,
the first visible light transmittance being 1% or more and 20% or less,
the second visible light transmittance being 5% or more and 50% or less, and
an absolute value of difference between the first visible light transmittance and the second visible light transmittance being 2% or more and 45% or less.

2. The interlayer film for a laminated glass according to claim 1, wherein the colored region has a plane area of 100% in 100% of a total plane area of the interlayer film.

3. The interlayer film for a laminated glass according to claim 1 or 2, wherein the interlayer film has a maximum value of absolute values of rate of change in visible light transmittance of the laminated glass X in the colored region of 4.5%/mm or less from the one end side toward the other end side of the interlayer film.

4. The interlayer film for a laminated glass according to any one of claims 1 to 3, wherein
the colored region has a first non-gradation region where visible light transmittance of the laminated glass X is uniform from the one end side toward the other end side of the interlayer film, and a second non-gradation region where visible light transmittance of the laminated glass X is uniform from the one end side toward the other end side of the interlayer film, and
the first non-gradation region is located closer to the one end than the second non-gradation region.

5. The interlayer film for a laminated glass according to claim 4, wherein the interlayer film has a weight ratio of a total of contents of coloring agents contained in layers constituting the second non-gradation region of the interlayer film, to a total of contents of coloring agents contained in layers constituting the first non-gradation region of the interlayer film of 0.15 or more and 0.95 or less.

6. The interlayer film for a laminated glass according to claim 4 or 5, wherein
the colored region has a gradation region where visible light transmittance of the laminated glass X increases from the one end side toward the other end side of the interlayer film,
the first non-gradation region is located closer to the one end than the gradation region, and
the second non-gradation region is located closer to the other end than the gradation region.

7. The interlayer film for a laminated glass according to any one of claims 1 to 3, wherein the colored region has only a gradation region where visible light transmittance of the laminated glass X increases from the one end side toward the other end side of the interlayer film.

8. The interlayer film for a laminated glass according to any one of claims 1 to 7, wherein at least one of layers constituting the colored region of the interlayer film contains heat shielding particles.

9. The interlayer film for a laminated glass according to any one of claims 1 to 8, which is used in rear glass, roof glass, or rear-roof integrated glass.

10. A laminated glass comprising:
a first lamination glass member;
a second lamination glass member; and
the interlayer film for a laminated glass according to any one of claims 1 to 9,
the interlayer film for a laminated glass being arranged between the first lamination glass member and the second lamination glass member.

11. A laminated glass having one end, and the other end being at an opposite side of the one end, the laminated glass comprising:
a first lamination glass member;
a second lamination glass member; and
an interlayer film,
the interlayer film being arranged between the first lamination glass member and the second lamination glass member,
the laminated glass having a colored region having a visible light transmittance of 1% or more and 50% or less,
the colored region having a plane area of 95% or more in 100% of a total plane area of the laminated glass,
the laminated glass having a first visible light transmittance at a position of 5 cm from the one end toward the other end, and a second visible light transmittance at a position of 5 cm from the other end toward the one end, the first visible light transmittance being smaller than the second visible light transmittance,
the first visible light transmittance being 1% or more and 20% or less,
the second visible light transmittance being 5% or more and 50% or less,
an absolute value of difference between the first visible light transmittance and the second visible light transmittance being 2% or more and 45% or less.

12. The laminated glass according to claim 10 or 11, wherein the colored region has a plane area of 100% in 100% of a total plane area of the laminated glass.

13. The laminated glass according to any one of claims 10 to 12, wherein the laminated glass has a maximum value of absolute values of rate of change in visible light transmittance in the colored region of 4.5%/mm or less from the one end side toward the other end side.

14. The laminated glass according to any one of claims 10 to 13, wherein
the colored region has a first non-gradation region where visible light transmittance is uniform from the one end side toward the other end side, and a second non-gradation region where visible light transmittance is uniform from the one end side toward the other end side, and
the first non-gradation region is located closer to the one end than the second non-gradation region.

15. The laminated glass according to claim 14, wherein
the colored region has a gradation region where visible light transmittance increases from the one end side toward the other end side,
the first non-gradation region is located closer to the one end than the gradation region, and
the second non-gradation region is located closer to the other end than the gradation region.

16. The laminated glass according to any one of claims 10 to 13, wherein the colored region has only a gradation region where visible light transmittance increases from the one end side toward the other end side.
